(19) Europäisches Patentamt
European Patent Office
Office européen des brevets

(11) **EP 3 383 652 B1**

(12) **EUROPÄISCHE PATENTSCHRIFT**

(45) Veröffentlichungstag und Bekanntmachung des Hinweises auf die Patenterteilung:
**23.10.2019   Patentblatt 2019/43**

(21) Anmeldenummer: **16806088.7**

(22) Anmeldetag: **05.12.2016**

(51) Int Cl.:
**B32B 27/08** (2006.01)   **B32B 27/30** (2006.01)
**B32B 27/32** (2006.01)   **B32B 27/36** (2006.01)
**B32B 1/08** (2006.01)   **B32B 3/26** (2006.01)
**B32B 27/20** (2006.01)

(86) Internationale Anmeldenummer:
**PCT/EP2016/079791**

(87) Internationale Veröffentlichungsnummer:
**WO 2017/093572 (08.06.2017 Gazette 2017/23)**

(54) **LICHTDICHTE SCHRUMPFFOLIE**

LIGHT-PROOF SHRINK FILM

FEUILLE RETRACTABLE OPAQUE A LA LUMIERE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA**
Benannte Validierungsstaaten:
**MA**

(30) Priorität: **03.12.2015   EP 15197908**

(43) Veröffentlichungstag der Anmeldung:
**10.10.2018   Patentblatt 2018/41**

(73) Patentinhaber: **Klöckner Pentaplast Europe GmbH & Co. KG**
**56412 Heiligenroth (DE)**

(72) Erfinder:
• **SCHURR, Manuel**
**56412 Heiligenroth (DE)**
• **DUX, Christian**
**84577 Tüßling (DE)**
• **DEIRINGER, Günther**
**84556 Kastl (DE)**

(74) Vertreter: **Rösler Rasch van der Heide & Partner**
**Bodenseestraße 18**
**81241 München (DE)**

(56) Entgegenhaltungen:
**EP-A1- 1 616 695        EP-A1- 2 298 665**
**DE-A1-102007 018 182**

**Beschreibung**

Die Erfindung betrifft eine wärmeschrumpfbare Folie mit einer ersten Polymer-Lage, umfassend ein Dunkelpigment, und einer zweiten Polymer-Lage, umfassend ein Weißpigment.

Wärmeschrumpfbare Polymer-Folien werden häufig dafür eingesetzt, andere Gegenstände zu umhüllen. Bei diesen Gegenständen handelt es sich oftmals wiederum um Gegenstände aus Plastik oder Glas, wie beispielsweise Flaschen, Becher oder Boxen zur Aufbewahrung. Die Folien sollen dabei mehrere Aufgaben erfüllen. Beispielsweise sollen sie bedruckbar sein, beispielsweise um den Inhalt des umhüllten Gegenstands anzugeben. Hierzu ist es erforderlich, dass die Farbe der Folie sich nicht störend auf eine aufzubringende Druckfarbe auswirkt. Weiterhin sollen die Folien möglichst eine geeignete Haptik aufweisen, um sicher und rutschfrei in einer Hand gehalten zu werden. Insbesondere wenn die Gegenstände wie etwa Flaschen oder Becher für die Aufnahme von Lebensmitteln gedacht sind, also beispielsweise Getränkeflaschen, Joghurtbecher oder Becher für Salate und dergleichen darstellen, so ist es erforderlich, den Durchtritt von Licht in das Innere der Flaschen, Becher oder Boxen so gering wie möglich zu halten, um den Qualitätsverlust der aufbewahrten Lebensmittel während der Lagerungszeit zu minimieren. Tritt Licht durch, so kann dies beispielsweise zum Abbau oder zur Veränderung wertvoller lichtsensitiver Inhaltsstoffe der Lebensmittel führen, beispielsweise zum Abbau von Vitaminen, wie etwa des Vitamins B2 oder des Vitamins C, oder zur Oxidation ungesättigter Fettsäuren. Insbesondere der UV-Anteil des Lichts kann hierzu beitragen.

In der Vergangenheit wurde daher versucht, die Lichtdurchlässigkeit von Folien durch Zusatzstoffe herabzusetzen. So beschreibt die Offenlegungsschrift DE 102006051657 A1 eine Polyesterfolie mit einer Schicht, die ein weißfärbendes Pigment enthält. Diese Folie soll eine Transparenz von weniger 60 % aufweisen, in einem Vergleichsbeispiel wurden 22 % erreicht. Weiterhin beschreibt die Offenlegungsschrift DE 102005025233 A1 eine weiß-opake Folie, die Bariumsulfat und Titandioxid enthält. Mit dieser Folie wurde eine Transparenz im Bereich von 16,5 bis 17,5 % erzielt.

Allerdings sind diese Transparenzgrade immer noch unzureichend. Insbesondere wenn eine Folie im Zusammenhang mit der Aufbewahrung von Lebensmitteln mit lichtsensitiven Inhaltsstoffen über eine längere Zeit eingesetzt werden soll, sind deutlich geringere Transparenzgrade wünschenswert.

In der Vergangenheit wurde daher versucht, die Lichtdurchlässigkeit von Polymerfolien durch Bedrucken mit schwarzer Farbe zu reduzieren. Allerdings ist der dadurch erzielte Effekt eher gering, da technisch bedingt nur eine vergleichsweise dünne schwarze Schicht aufgebracht werden kann. Darüber hinaus steigert sich der Gesamtaufwand durch den erforderlichen Nachbearbeitungsschritt der Bedruckung. Weiterhin weisen derartige bedruckte Folien nach dem Umhüllen von Gegenständen in der Regel Fehlstellen auf, beispielsweise durch Beschädigung der Druckschicht, die durch die Handhabung der Folie entsteht, oder auch durch weiterverarbeitende Schritte, da üblicherweise zwei Kanten einer Folie miteinander verbunden werden müssen, beispielsweise durch Lösungssiegeln oder Heißsiegeln. An den Versiegelungsstellen wird dann das Design durch den abweichenden Farbeindruck streifenförmig gestört. Weiterhin kann an diesen Stellen doch wieder ein erhöhter Anteil von Licht in den von der Polymerfolie umgebenen Gegenstand, beispielsweise eine Flasche, einen Becher oder eine Box mit einem darin befindlichen Getränk oder sonstigem Lebensmittel, eintreten. Darüber hinaus wirkt sich die schwarze Druckschicht störend aus, falls zusätzlich noch eine zusätzliche Bedruckung erforderlich ist, etwa um anzugeben, welches Produkt ein mit einer derartigen Polymerfolie umhüllter Gegenstand beinhaltet.

EP 2 298 665 A1 offenbart einen lichtabschirmenden Schrumpffilm zum Verpacken, der eine Lichtabschirmharzschicht, eine kaschierende Harzschicht und transparente Harzschichten, die als beide äußere Schichten vorgesehen sind, umfasst; die kaschierende Schicht ist vorgesehen, um die Farbe der lichtabschirmenden Harzschicht zu kaschieren. Jede der Harzschichten ist vorzugsweise aus Polyolefinen ausgewählt. Die Lichtabschirmharzschicht enthält anorganische Pigmente, in den Farben schwarz, braun oder silbern, und weist eine Dicke von 2 bis 8 $\mu$m und eine Lichttransmission von 3% oder weniger bei der Wellenlängen 200 bis 600 nm auf. Die kaschierende Harzschicht enthält weiße Pigmente, z.B. $TiO_2$ und ihre Dicke beträgt 2,4 bis 8 $\mu$m. Der Schrumpffilm weist eine Dicke von 10 $\mu$m bis 30 $\mu$m und nach 15 Sekunden in einem Glycerinbad mit einer Temperatur von 110°C eine Schrumpfung in einer Hauptschrumpfrichtung von mindestens 15%, vorzugsweise mindestens 25% auf. Zumindest eine der Oberflächen des Schrumpffilms, insbesondere eine äußere Oberfläche einer mit dem Schrumpffilm hergestellten Verpackung, weist eine Luminanz L* nach JISZ8729 von 70 oder mehr auf.

Die Aufgabe der Erfindung besteht nun darin, wärmeschrumpfbare Polymerfolien mit weiter verringerter Lichttransmission sowie Verfahren zu deren Herstellung bereitzustellen. Weiterhin sollen möglichst Polymerfolien bereitgestellt werden, die eine Haptik aufweisen, welche ein sicheres Halten eines von einer derartigen Polymerfolie umhüllten Gegenstands ermöglicht. Ein weiterer wünschenswerter Aspekt ist eine gute Bedruckbarkeit, da die Polymerfolie, wenn sie in der Praxis zur Umhüllung eines Gegenstands verwendet wird, in der Regel mit Angaben zum umhüllten Gegenstand bzw. zu dessen Inhalt versehen wird. Im Rahmen der guten Bedruckbarkeit soll die Polymerfolie sich insbesondere nicht störend auf die aufzubringende Druckfarbe auswirken, beispielsweise deren Farbeindruck verfälschen, und somit insbesondere eine farblich möglichst unverfälschte Oberfläche bereitstellen, auf der andere Farben aufgetragen werden können.

Darüber hinaus sollen die bereitgestellten Polymerfolien möglichst eine geringe Dichte aufweisen, um letztendlich Gewicht einzusparen. Auch eine geringe Dicke ist erwünscht, um bei gleichem Gewicht im Vergleich mit einer dickeren Folie mehr Polymerfolie auf Rollen aufbringen zu können, also die Flächenausbeute in m$^2$/kg zu erhöhen.

Die Erfindung ergibt sich aus den Merkmalen der unabhängigen Ansprüche. Vorteilhafte Weiterbildungen und Ausgestaltungen sind Gegenstand der abhängigen Ansprüche.

Die Aufgabe ist in einem ersten Aspekt gelöst durch eine wärmeschrumpfbare, monoaxial verstreckte Folie, umfassend eine erste Polymer-Lage A, die wenigstens ein Dunkelpigment umfasst, und weiterhin umfassend eine zweite Polymer-Lage B, die wenigstens ein Weißpigment umfasst, wobei die Lichttransmission der Folie maximal 12 %, wie etwa maximal 10%, vorzugsweise maximal 5 % beträgt, die Folie eine Dicke von 20 μm bis 100 μm aufweist, das Dickenverhältnis der ersten Polymer-Lage A zur zweiten Polymer-Lage B im Bereich 5:95 bis 50:50 liegt und die Folie eine Schrumpfung nach 15 Sekunden in einem Wasserbad mit 95 °C im Bereich von 20 bis 85 % aufweist. Zur Erreichung einer Wärmeschrumpfbarkeit ist die wärmeschrumpfbare Folie in einer Richtung verstreckt, wobei die Verstreckung dazu führt, dass die Folie nach 15 Sekunden in einem Wasserbad mit einer Temperatur von 95 °C eine Schrumpfung in einer Hauptschrumpfrichtung im Bereich von 20 % bis 85 %, beispielsweise 50 bis 75 %, wie etwa 65 % bis 75 % aufweist. Eine Verstreckung ist insbesondere möglich in einer Transversalrichtung oder in einer Maschinenrichtung, bezogen auf die bei der Herstellung der wärmeschrumpfbaren Folie verwendete Vorrichtung. Gemäß einer besonderen Ausführungsform liegt eine Verstreckung in Transversalrichtung vor, sodass die Hauptschrumpfrichtung ebenfalls die Transversalrichtung ist und keine Schrumpfung in einer Nebenschrumpfrichtung auftritt. Selbst bei einer monoaxialen Verstreckung kann jedoch beim Schrumpfen der Polymer-Folie auch in einer Nebenschrumpfrichtung ebenfalls eine geringe Dimensionsänderung, insbesondere Schrumpfung auftreten, die jedoch üblicherweise in einem geringen Bereich von ±10 %, insbesondere ±5 %, beispielsweise ±2 % bleibt, sodass Folien mit einer derartigen Schrumpfung in einer Nebenschrumpfrichtung ebenfalls noch umfasst sind.

Die erste Polymer-Lage A und die zweite Polymer-Lage B umfassen unabhängig voneinander ein oder mehrere Polymere, die ausgewählt sind aus der Gruppe der Polyester, Polyolefine, Polystyrole und Polyvinylhalogenide, worunter auch Copolymere von Polyestern, Polyolefinen, Polystyrolen und Polyvinylhalogenide verstanden werden. Bezogen auf das Gesamtgewicht einer Lage stellen das bzw. die Polymere den Hauptanteil dar, vorzugsweise wenigstens 70, wenigstens 80, wenigstens 85 oder wenigstens 90 Gew.-% (Gewichtsprozent).

Unter Polyestern werden wie fachüblich Polymere verstanden, die durch Veresterung zwei- oder höherwertiger Carbonsäuren mit zwei- oder höherwertigen Alkoholen entstehen, wobei auch Copolyester umfasst sind. Nicht-beschränkende Beispiele für die Säurekomponente entsprechender Polyester sind Dicarbonsäuren, beispielsweise Terephthalsäure, Ethandisäure, Propandisäure, Butandisäure, Adipinsäure, Azelainsäure (1,7-Heptandicarbonsäure), Sebacinsäure (1,8-Octandicarbonsäure), Phthalsäure, Isophthalsäure, Naphthalindicarbonsäure, Diphenylether-Dicarbonsäure, Maleinsäure, Itaconsäure, 1,3-Cyclohexandicarbonsäure und 1,4-Cyclohexandicarbonsäure. Nicht beschränkende Beispiele für die Alkoholkomponente entsprechender Polyester sind Diole wie beispielsweise 1,2-Ethandiol, 1,2-Propandiol, 1,3-Propandiol, 1,2-Butandiol, 1,3-Butandiol, 2,3-Butandiol, 1,4-Butandiol, 2-Methyl-1-propandiol, Hexandiol, insbesondere 1,6-Hexandiol, Diethylenglycol, 1,4-Cyclohexandimethanol, 1,5-Pentandiol, 1,8-Octandiol, 2,2,4-Trimethyl-1,3-Pentandiol, Propylenglycol, 2,2,4,4-Tetramethyl-1,3-Cyclobutandiol, 2,4-Dimethyl-2-ethylhexan-1,3-diol, 2,2-Dimethyl-1,3-propandiol (Neopentylglycol), 2-Ethyl-2-butyl-1,3-propandiol, 2-Ethyl-2-isobutyl-1,3-propandiol, Thiodiethanol, 1,2-Cyclohexandimethanol, 1,3-Cyclohexandimethanol und 1,4-Benzoldimethanol, sowie Polyalkylenglykole wie etwa Polyethylenglycol oder Polypropylenglykol. Jedoch sind die erste Polymer-Lage A und die zweite Polymer-Lage B bei Polyester-haltigen wärmeschrumpfbaren Folien nicht beschränkt auf Dicarbonsäuren und Diole, sondern es können auch höherwertigere Carbonsäuren und/oder höherwertigere Alkohole verwendet werden. Der Polyester der ersten Polymer-Lage A und der Polyester der zweiten Polymer-Lage B können unabhängig voneinander ein oder mehrere Säurekomponenten und/oder ein oder mehrere Diol-Komponenten umfassen, womit unter Polyestern sowohl Homopolyester als auch Copolyester umfasst sind. Die Polymere der ersten Polymer-Lage A und der zweiten Polymer-Lage B können identisch oder voneinander verschieden sein.

Die erste Polymer-Lage A und die zweite Polymer-Lage B können im Falle einer Polyester-haltigen wärmeschrumpfbaren Folie den gleichen Polyester oder das gleiche Gemisch aus unterschiedlichen Polyestern umfassen, oder alternativ unterschiedliche Polyester und/oder Polyestergemische umfassen. Weiterhin können in der ersten Polymer-Lage A bzw. in der zweiten Polymer-Lage B die jeweiligen Polyester die einzigen Polymere sein. Alternativ können die erste Polyester-Lage A bzw. die zweite Polyester-Lage B unabhängig voneinander ein oder mehrere, von Polyester abweichende Polymere umfassen, sofern, bezogen auf die jeweils betrachtete Polyester-Lage, der Polyester in Gewichtsprozent den Hauptanteil an Polymer stellt, vorzugsweise mindestens 50 Gewichtsprozent. Beispiele für Polymere, die nicht Polyester sind, sind Polyamide oder Polymere der Gruppe der Polyolefine, Polyvinylchlorid oder Polystyrole. Liegen Polymere in der ersten Polymer-Lage A und/oder in der zweiten Polymer-Lage B vor, die sich hinsichtlich der Polarität von dem Polyester in der gleichen Lage unterscheiden, so kann vorgesehen sein, dass die gleiche Lage als Additiv einen oder mehrere Verträglichkeitsmacher umfasst. Verträglichkeitsmacher wirken als Phasenvermittler und stellen beispielsweise amphiphile Substanzen dar, die zwischen einer eher polaren und einer eher apolaren Phase vermitteln, oder Block-, Diblock- oder Propfpolymere, die zwischen Phasengrenzen vemitteln können. Beispiele für Verträglichkeitsmacher, die insbesondere bei Lagen verwendbar sind, die Styrol oder entsprechende Styrol-Copolymere umfassen, sind Styrol-Maleinsäureanhydrid, beispielsweise unter der Markenbezeichnung XIRAN® vertriebene Poly-(Styrol-Maleinsäure-Anhydride) wie etwa XIRAN® SZ 0820, XIRAN® SZ 15170 und dergleichen von Polyscope (Geleen, Niederlande). Gemäß einer besonderen Ausführungsform umfasst die wärmeschrumpfbare Folie außer einem oder mehreren Polyestern in der ersten Polymer-Lage A bzw. der zweiten Polymer-Lage B keine von Polyestern abweichenden Polymere. Gemäß einer besonderen Weiterbildung umfassen die als Polymere ausschließlich Polyester umfassende erste Polymer-Lage A und die als Polymere ebenfalls ausschließlich Polyester umfassende zweite Polymer-Lage B wenigstens einen gemeinsamen Polyester.

Unter Polyolefinen werden wie fachüblich Polymere und Copolymere auf der Grundlage von Alkenen verstanden, wobei als Beispiele für Monomere insbesondere Ethylen, Propylen, 1-Buten und Isobuten sowie weitere lineare oder auch verzweigte alpha-Olefine sowie cyclische Olefine zu nennen sind und als nicht-beschränkende Beispiele für zusätzliche Comonomere Vinylacetate, Acrylate und/oder Acrylsäure. Nicht-beschränkende Beispiele für Polyolefine sind Polypropylene sowie Polyethylene, wie etwa Polyethylene mit hoher Dichte (PE-HD) sowie insbesondere Polyethylene mit niedriger Dichte (PE-LD) und lineare Polyethylene mit niedriger Dichte (PE-LLD).

Unter Polystyrolen werden wie fachüblich Polymere oder Copolymere von Styrol verstanden. Beispiele für Copolymere sind Styrol-Butadien-Copolymere. Beispiele für geeignete Styrol-Butadien-Copolymere sind die unter der Bezeichnung "Clearen 511 L", "Clearen 631 M" oder "Clearen 740M" von der Denka Kagaku Kogyo Kabushiki Kaisha (Tokyo, Japan), das "K-Resin® SBC" von Chevron Phillips Chemical Company LLC (The Woodlands, Texas, USA) sowie verschiedene, unter der Markenbezeichnung "Styrolux" von der Styrolution GmbH (Frankfurt, Deutschland) angebotenen Styrol-Butadien-Copolymere.

Bei einem Styrol-Butadien-Copolymer kann es sich weiterhin um eine Kombination aus wenigstens zwei verschiedenen Styrol-Butadien-Copolymeren handeln. Derartige Kombinationen kommen zum Einsatz, um durch Variation der Anteile der einzelnen Styrol-Butadien-Copolymere gewünschte Eigenschaften einzustellen, beispielsweise das Schmelzverhalten, die Zähigkeit, die Steifigkeit oder das Schrumpfverhalten. Ein Beispiel für derartige einzelne Styrol-Butadien-Copolymere, die in unterschiedlichen Abmischungen kombinierbar sind, ist das System aus "Styrolux S" und "Styrolux T" der Styrolution GmH (Frankfurt, Deutschland), wobei diese einzelnen Styrol-Butadien-Copolymere in verschiedenen Anteilen miteinander kombinierbar sind, um beispielsweise einen gewünschten Grad an Steifigkeit und natürlicher Schrumpfung einzustellen.

Unter Polyvinylhalogeniden werden Polymere und Copolymere von Vinylhalogeniden verstanden, beispielsweise Polyvinylchloride und Polyvinylfuoride. Beispiele für Comonomere sind Vinylacetat, Vinylidenchlorid, Acrylsäure, Fumarsäure, Itaconsäure, Methacrylsäure, Maleinsäure, und Vinylphosphansäure sowie deren Ester mit einer Alkoholkomponente von 1 bis 10 Kohlenstoffatomen, insbesondere 1 bis 7 Kohlenstoffatomen, Acrylnitril, Styrol sowie Pfropfcopolymerisate, die aus Vinyltchlorid, Butadien und Acrylnitril bestehen, sowie Polymergemische der vorstehenden Polymerisate.

Die erste Polymer-Lage A und die zweite Polymer-Lage B umfassen vorzugsweise jeweils Polymere aus der gleichen Gruppe. Da die Polymere auswählbar sind aus den Gruppen der Polyester, Polyolefine, Polystyrole und Polyvinylhalogenide, werden beispielsweise für die erste Polymer-Lage A und die zweite Polymer-Lage B jeweils Polymere der gleichen Gruppe als Haupt-Polymere, bezogen auf den Gewichtsanteil der jeweiligen Lage, oder als einzige Polymere gewählt, wenngleich optional ein oder mehrere Polymere aus einer oder mehreren unterschiedlichen Gruppen als Neben-Polymere mit einem an der Lage im Vergleich zu den Haupt-Polymeren geringeren Gewichtsanteil in der jeweiligen Lage vorliegen können, vorzugsweise mit maximal 25 Gew.-%. Dementsprechend würden für den Fall, dass eine erste Polymer-Lage A als Polymer oder Polymere bezogen auf den Gewichtsanteil in dieser Lage hauptsächlich oder ausschließlich Polyester umfasst, auch für die zweite Polymer-Lage B hauptsächlich oder ausschließlich Polyester verwendet, sodass die erste Polymer-Lage A eine erste Polyester-Lage A und die zweite Polymer-Lage B eine zweite Polyester-Lage B darstellt. Analog würden für den Fall, dass eine erste Polymer-Lage A als Polymer oder Polymere bezogen auf den Gewichtsanteil in dieser Lage hauptsächlich oder ausschließlich Polyolefine umfasst, auch für die zweite Polymer-Lage B hauptsächlich oder ausschließlich Polyolefine verwendet, sodass die erste Polymer-Lage A eine erste Polyolefin-Lage A und die zweite Polymer-Lage B eine zweite Polyolefin-Lage B darstellt. Analog würden für den Fall, dass eine erste Polymer-Lage A als Polymer oder Polymere bezogen auf den Gewichtsanteil in dieser Lage hauptsächlich oder ausschließlich Polystyrole umfasst, auch für die zweite Polymer-Lage B hauptsächlich oder ausschließlich Polystyrole verwendet, sodass die erste Polymer-Lage A eine erste Polystyrol-Lage A und die zweite Polymer-Lage B eine zweite Polystyrol-Lage B darstellt. Ebenso würden für den Fall, dass eine erste Polymer-Lage A als Polymer oder Polymere bezogen auf den Gewichtsanteil in dieser Lage hauptsächlich oder ausschließlich Polyvinylhalogenide umfasst, auch für die zweite Polymer-Lage B hauptsächlich oder ausschließlich Polyvinylhalogenide verwendet, sodass die erste Polymer-Lage A eine erste Polymer Polyvinylhalogenid-Lage A und die zweite Polymer-Lage B eine zweite Polyvinylhalogenid-Lage B darstellt. Jedoch ist im Rahmen der vorgenannten Fälle auch die Möglichkeit vorgesehen, dass eine Lage neben einem oder mehreren Polymer-Hauptbestandteilen einer gemeinsamen Gruppe auch einen geringeren Anteil eines oder mehrerer Polymere einer oder mehrerer unterschiedlicher Gruppen umfasst.

Die wärmeschrumpfbare Folie kann aus der ersten Polymer-Lage A und der zweiten Polymer-Lage B bestehen, oder neben der ersten Polymer-Lage A und der zweiten Polymer-Lage B eine oder mehrere weitere Lagen umfassen. Beispiele für derartige Lagen sind Wiederholungen der ersten Polymer-Lage A und/oder der zweiten Polymer-Lage B, sodass beispielsweise in einer Folie die erste Polymer-Lage A mehrfach vorkommt. Weitere Beispiele für derartige Lagen sind Lagen, die ein oder mehrere, unabhängig voneinander aus der Gruppe der Polyester, Polyolefine, Polystyrole und/oder Polyvinylhalogenide und/oder weiteren Gruppen von Polymeren ausgewählte Polymere, jedoch weder ein Dunkelpigment noch ein Weißpigment enthalten, wobei zwischen den Lagen gegebenenfalls Haftvermittler angeordnet sind, und/oder eine oder mehrere Pigmentlagen, etwa im Rahmen einer Bedruckung. Die erste Polymer-Lage A und die zweite Polymer-Lage B grenzen vorzugsweise unmittelbar aneinander an. Gemäß einer Ausführungsform besteht die wärmeschrumpfbare Folie aus der ersten Polymer-Lage A und der zweiten Polymer-Lage B, gemäß einer alternativen Ausführungsform aus der ersten Polymer-Lage A, der zweiten Polymer-Lage B und wenigstens einer auf der zweiten Polymer-Lage B aufgebrachten Pigmentlage, welche eine Bedruckung darstellt.

Ein weiteres Beispiel für eine Lage stellt eine Lage dar, die einen Siegellack, insbesondere einen Heisssiegellack, umfasst oder daraus besteht. Gemäß einer weiteren Ausführungsform besteht die wärmeschrumpfbare Folie aus der ersten Polymer-Lage A, der zweiten Polymer-Lage B, und wenigstens einer weiteren Polymer-Lage, die weder ein Weißpigment noch ein Dunkelpigment aufweist. Beispielsweise besteht gemäß dieser weiteren Ausführungsform die wärmeschrumpfbare Folie aus der ersten Polymer-Lage A, der zweiten Polymer-Lage B, und genau einer weiteren Polymer-Lage, die weder ein Weißpigment noch ein Dunkelpigment aufweist. Die wenigstens eine weitere Polymer-Lage ohne Weißpigment oder Dunkelpigment grenzt beispielsweise an die zweite Polymer-Lage B an, vorzugsweise an der ersten Polymer-Lage A. Liegen mehrere Lagen ohne Weißpigment oder Dunkelpigment, also pigmentfreie Lagen vor, so können diese an die erste Polymer-Lage A und/oder an die zweite Polymer-Lage B angrenzen, vorzugsweise jedoch an die erste Polymer-Lage A.

Für den Fall, dass die Polymere oder Haupt-Polymere einer Lage im Vergleich mit den Polymeren oder Haupt-Polymeren einer daran angrenzenden Lage aus unterschiedlichen Gruppen stammen, die nicht miteinander kompatibel sind, beispielsweise sich hinsichtlich der Polarität unterscheiden, so kann vorgesehen sein, dass eine oder beide der aneinander angrenzenden Lagen als Additiv einen oder mehrere Verträglichkeitsmacher umfasst. Verträglichkeitsmacher vermitteln Kompatibilität und wirken beispielsweise als Phasenvermittler, und stellen zum Beispiel amphiphile Substanzen dar, die zwischen einer eher polaren und einer eher apolaren Phase vermitteln, oder Block-, Diblock- oder Propfpolymere, die zwischen Phasengrenzen vermitteln können.

Die erste Polymer-Lage A bzw. die zweite Polymer-Lage B können ausschließlich aus dem oder den Polymeren sowie dem oder den Dunkelpigmenten bzw. dem oder den Weißpigmenten bestehen, oder weitere Bestandteile umfassen, die gegebenenfalls auch Bestandteil weiterer Lagen der wärmeschrumpfbaren Folie sein können. Beispiele für weitere Bestandteile sind Additive, wie etwa weitere Farbstoffe; Aufheller; Mattierungsmittel; Stabilisatoren, wie etwa Stabilisatoren gegen Licht- oder UV-Strahlung; Antiblockadditive, wie beispielsweise organische Füllstoffe, Silikate oder Wachse; Gleitmittel zur Beeinflussung der Schmelzviskosität; Antistatika; Antioxidantien; Flammhemmer; Hydrolysehemmer; und Modifizierungsmittel, etwa zur Beeinflussung von Eigenschaften wie Wärmebeständigkeit oder Schlagzähigkeit, oder Nukleierungsmittel, hohlraumbildende Additive, oder die schon angesprochenen Verträglichkeitsmacher. Derartige Additive liegen in der jeweiligen Polymer-Lage vorzugsweise mit einem Anteil von maximal 15 Gewichtsprozent, vorzugsweise maximal zehn Gewichtsprozent, insbesondere maximal fünf Gewichtsprozent, bezogen auf das Gesamtgewicht der jeweiligen Lage, vor. Abweichend davon können hohlraumbildende Additive beispielsweise mit einem Anteil von bis zu 40 Gew.-%, beispielsweise bis zu 30 Gew.-%, wie etwa 5 bis 30 Gew.-%, insbesondere 5 bis 25 Gew.-% in der jeweiligen Lage vorliegen.

Bei dem wenigstens einen Dunkelpigment kann es sich um ein anorganisches oder ein organisches Dunkelpigment handeln. Nicht-beschränkende Beispiele für anorganische Dunkelpigmente und insbesondere Schwarzpigmente sind Pigmente auf der Basis feiner Metallpartikel, beispielsweise mit einem Durchmesser bis zu maximal einigen Mikrometern, weiterhin Pigmente auf der Basis von Metallverbindungen, wie beispielsweise Eisenoxidbraun oder Eisenoxidschwarz, Eisen-Mangan-Mischoxide, Spinellschwarz (Kupferchromite wie etwa $Co(Cr,Fe)_2O_4$), $Cu(Cr,Fe,Mn)_2O_4$). Nicht-beschränkende Beispiele für organische Dunkelpigmente und insbesondere Schwarzpigmente sind Anilinschwarz (CAS 13007-86-8), unter der Sammelbezeichnung "Pigmentruß" angebotene Pigmentmischungen, Tierkohle, Graphit, (Holzkohle), und Ruß, insbesondere Industrieruß. Der Fachmann ist mit dem Konzept von Industrieruß vertraut, der beispielsweise hergestellt wird als Verbrennungsruß durch unvollständige Verbrennung von Kohlenwasserstoffen oder als Spaltruß durch thermische Zersetzung. Herkömmlicherweise wird Industrie-Ruß (auch als "Carbon Black" bezeichnet) in thermischen Reaktoren, insbesondere Öfen hergestellt, in denen ein Brennstoff zusammen mit Luft kontrolliert verbrannt wird, wie beispielsweise beschrieben in den Patenten US 7,431,909 B1 und US 7,655,209 B2. Die Dunkelpigmente können einzelnen oder in Kombinationen zweier oder mehrerer Dunkelpigmente verwendet werden. In einer besonderen Ausführungsform umfasst das Dunkelpigment feine Metallpartikel oder besteht ausschließlich daraus. In einer weiteren besonderen Ausführungsform umfasst das Dunkelpigment sowohl feine Metallpartikel als auch Russ und/oder Industrieruß, oder besteht daraus. Gemäß einer noch weiteren, besonderen Ausführungsform umfasst das Dunkelpigment Ruß und/oder Industrieruß, oder besteht ausschließlich aus Ruß und/oder Industrieruß. Der mittlere Teilchendurchmesser des Rußes und/oder Industrierußes liegt vorzugsweise in einem Bereich von 20 nm bis 100 nm. Vorteilhaft wird mit Ruß und/oder Industrieruß ein Pigment verwendet, welches eine wirksame Lichtbarriere über den gesamten relevanten Wellenlängenbereich von 360 Nanometer bis 750 nm bereitstellt, insbesondere in einem Wellenlängenbereich von 360 bis 560 nm, und keine nachteiligen Eigenschaften während des für die Herstellung einer wärmeschrumpfbaren Folie erforderlichen Verstreckens aufweist. Um die Lichttransmission im Zusammenwirken mit den Weißpigmenten der zweiten Polymer-Lage B ausreichend zu blockieren und gleichzeitig eine durch den Effekt der Dunkelpigmente der ersten Polymer-Lage A nicht gestörte weiße zweite Polymer-Lage B bereitzustellen, beträgt der Gewichtsanteil des oder der Dunkelpigmente in der ersten Polymer-Lage A vorzugsweise wenigstens 0,5 Gew.-%, insbesondere wenigstens 0,75 Gew.-%. Der Gewichtsanteil des oder der Dunkelpigmente in der ersten Polymer-Lage A beträgt vorzugsweise maximal 6 %, insbesondere maximal 4 Gewichtsprozent, beispielsweise 0,5 bis 3,5 Gewichtsprozent, wie etwa 0,75 bis 3,0 Gewichtsprozent. Der Anteil des oder der Dunkelpigmente an der gesamten Folie beträgt beispielsweise 0,05 Gew.-% bis 3,0 Gew.-%, wie etwa 0,05 Gew.-% bis 2,0 Gew.-% oder 0,1 Gew.-% bis 2,0 Gew.-%, jedoch sind mit Hinblick auf eine Folie mit einem möglichst geringen Gehalt an Dunkelpigment die angestrebten Ziele einer ausreichend geringen Lichttransmission und einer für Druckzwecke weiß erscheinenden Oberfläche der zweiten Polymer-Lage B auch Folien mit einem Anteil des oder der Dunkelpigmente im Bereich von 0,05 Gew.-% bis 1,0 Gew.-%, beispielsweise 0,1 Gew.-% bis 1,0 Gew.-% oder 0,1 Gew.% bis 0,9 Gew.-% erreichbar.

Bei dem wenigstens einen Weißpigment kann es sich um ein anorganisches oder ein organisches Weißpigment handeln. Nicht-beschränkende Beispiele für anorganische Weißpigmente sind Bariumsulfat, Calciumcarbonat, Titandioxid, Zinkoxid, Zinksulfid oder Mischungen zweier oder mehrerer Vertreter daraus. Nicht-beschränkende Beispiele für organische Weißpigmente sind die in der Offenlegungsschrift DE 102007061307 A1 beschriebenen Naphthalintetracarbonsäureimide oder die in der Offenlegungsschrift DE 4334735 A1 beschriebenen Alkylenbismelamin-Derivate. Gemäß einer besonderen Ausführungsform umfasst das Weißpigment Titandioxid oder besteht ausschließlich aus Titandioxid. In der zweiten Polymer-Lage B liegen das oder die Weißpigmente vorzugsweise mit einem Anteil von 3 bis 23 Gew.-%, wie etwa 3 bis 21 Gew.-% oder 3 bis 20 Gew.-% vor, beispielsweise mit 5 bis 13 Gew.-% oder 6 bis 9 Gew.-%.

Das wenigstens eine Dunkelpigment und das wenigstens eine Weißpigment werden vorzugsweise in Partikelgrößen eingesetzt, die eine homogene Einlagerung der Partikel in der ersten Polymer-Lage A bzw. der zweiten Polymer-Lage B ermöglichen und während des Verstreckens im Zuge der Herstellung der wärmeschrumpfbaren Folien keine Hohlräume um die Partikel bilden. Entsprechende Partikelgrößen sind beispielsweise solche im einstelligen Mikrometerbereich oder im Submikrometerbereich. Beispielsweise wird Titandioxid vorzugsweise mit einer mittleren Partikelgröße im Submikrometerbereich eingesetzt, wie etwa 0,2 bis 0,8 $\mu$m, beispielsweise etwa 0,3 $\mu$m.

Gemäß einer besonderen Ausführungsform umfasst die erste Polymer-Lage A als Dunkelpigment Ruß und/oder Industrieruß, und die zweite Polymer-Lage B umfasst das Weißpigment Titandioxid. Insbesondere können Ruß und/oder Industrieruß sowie Titandioxid die einzigen Dunkelpigmente bzw. Weißpigmente darstellen.

Das Dickenverhältnis der ersten Polymer-Lage A und der zweiten Polymer-Lage B liegt im Bereich von 5:95 bis 50:50, beispielsweise im Bereich von 20:80 bis 30:70. Vorzugsweise beträgt die Dicke der zweiten Polymer-Lage B wenigstens das 1,5-fache, vorzugsweise wenigstens das 2,3-fache der Dicke der ersten Polymer-Lage A, beispielsweise wenigstens das 4-fache. Beispielsweise beträgt bei einer Foliendicke von insgesamt 35 bis 45 $\mu$m die Dicke der ersten Polymer-Lage A 7 bis 10 $\mu$m.

Die wärmeschrumpfbare Folie weist eine Dicke von 20-100 $\mu$m auf, gemäß besonderen Ausführungsformen eine Dichte von weniger als 50 $\mu$m. Beispielsweise liegt die Dicke in einem Bereich von 30 $\mu$m bis 45 $\mu$m, wie etwa 40 $\mu$m. Die Dickenabweichungen liegen vorzugsweise im Bereich von nicht mehr als $\pm$10 %. Für den Fall, dass die Folie neben der ersten Polymer-Lage A und der zweiten Polymer-Lage B eine oder mehrere weitere Lagen aufweist, welche weder ein Weißpigment noch ein Dunkelpigment umfassen, ist vorzugsweise vorgesehen, dass die Gesamtdicke derartiger Lagen maximal 30 %, insbesondere maximal 25 %, wie etwa maximal 20 %, maximal 15 %, maximal 10 % oder maximal 5 % der Dicke der Folie beträgt.

Mit einer derartigen wärmeschrumpfbaren Folie werden vorteilhaft die im Stand der Technik aufgezeigten Probleme gelöst. Die zweite Polymer-Lage B trägt mit ihrem wenigstens einen Weißpigment dazu bei, die Lichttransmission der Folie herabzusetzen. In Kombination mit der ersten Polymer-Lage A wird die Lichttransmission der wärmeschrumpfbaren Folie insgesamt auf einen Wert von maximal 12 %, beispielsweise maximal 10 %, beispielsweise maximal 5 %, wie etwa maximal weniger als 1 % gesenkt, bezogen auf einen Wellenlängenbereich von 360 nm bis 750 nm. Wärmeschrumpfbare Folien mit derartigen Lichttransmissionen werden hierin als lichtdicht angesehen. Gemäß einer besonderen Ausführungsform braucht die Lichttransmission nicht weniger als 0,07 % zu betragen, da geringere Transmissionen in der Praxis keinen wesentlichen zusätzlichen Schutz lichtempfindlicher Lebensmittel bieten. Dementsprechend liegt in dieser Ausführungsform die Lichttransmission in einem Bereich von 0,07 % bis 12 %, oder 0,07 % bis 10 %, insbesondere 0,07 % bis 7 %, insbesondere 0,07 % bis 5 %, wie etwa 0,07 % bis 1,5 %. Der Wellenlängenbereich von 360 nm bis 750 nm deckt insbesondere schädliche Wellenlängen im UV-Bereich sowie diejenigen Wellenlängen ab, in denen viele Lebensmittelinhaltsstoffe, wie etwa pflanzliche Inhaltsstoffe, insbesondere Chlorophylle absorbieren, so dass eine Verringerung der Transmission der wärmeschrumpfbaren Folie in diesen Wellenlängenbereichen insbesondere bei der Umhüllung von Lebensmitteln. Eine derartige Folie stellt gegenüber herkömmlichen Folien, die zur Erzielung einer Lichtdichtheit ein oder gar mehrfach mit schwarzer Farbe bedruckt werden mussten, eine wesentliche Vereinfachung dar. Die Lichttransmission lässt sich insbesondere durch den Gehalt an Dunkelpigment gezielt einstellen, und weiterhin die erste Polymer-Lage A durch die Abdeckung durch die zweite Polymer-Lage B farblich gezielt abdecken. Anders als bei einer Folie, bei der im Rahmen einer Bedruckung eine Lage von Dunkelpigmenten auf einer Oberfläche aufgebracht ist, lässt sich die erfindungsgemäße Folie gut zu einem Schlauch verbinden, da die Dunkelpigmente in der Polymer-Lage integriert sind und somit im Rahmen einer Verbindung Polymere auf Polymere zu haften kommen, wohingegen eine Folie mit einer Pigmentlage sich weniger gut verbinden lässt.

Die wärmeschrumpfbare Folie ist somit auch zur Umhüllung von lichtsensitiven Gütern bzw. Behältern für lichtsensitive Güter, wie beispielsweise Lebensmittel, geeignet.

Angesichts des geringen Anteils der ersten Polymer-Lage A an der wärmeschrumpfbaren Folie lässt sich die Folie insgesamt gut recyceln, da dieser geringe Anteil an Dunkelpigment sich bei Verwendung des wiederverwendeten Materials in anderen Plastikmaterialien farblich kaum oder nicht bemerkbar macht. Ebenso kann während der Herstellung der wärmeschrumpfbaren Folie Ausschussmaterial problemlos wieder dem für die Herstellung der ersten Polymer-Lage A vorgesehenen Material zugefügt werden. Durch die Trennung der dunklen ersten Polymer-Lage A und der hellen zweiten Polymer-Lage B wird darüber hinaus vorteilhaft mit der zweiten Polymer-Lage B, die als Nebeneffekt auch zur Verringerung der Transmission der Polymer-Folie beiträgt, eine weiße und damit in farblicher Hinsicht außerordentlich gut bedruckbare Oberfläche bereitgestellt, da die weiße Farbe dieser Oberfläche sicherstellt, dass aufgebrachte Druckfarben hinsichtlich ihres Farbtons nicht verfälscht werden. Da die zweite Polymer-Lage B mindestens die gleiche Dicke aufweist wie die erste Polymer-Lage A, wird vorteilhaft sichergestellt, dass das Dunkelpigment der ersten Polymer-Lage A den von dem wenigstens einen Weißpigment der zweiten Polymer-Lage B erzeugten Farbeindruck nicht beeinflusst, insbesondere nicht durchscheint. Ein entsprechendes Durchscheinen würde zu einer Verdunklung führen, ist jedoch bei der erfindungsgemäßen wärmeschrumpfbaren Folie nicht zu befürchten, so dass die zweite Polymer-Lage B tatsächlich als weiß erscheint. All diese Eigenschaften wurden verwirklicht mit einer Folie, die vergleichsweise dünn ist und damit nur wenig zu dem Gewicht des Gegenstands beiträgt, den sie als wärmeschrumpfbare Folie umhüllen soll. Um eine weiße Oberfläche der zweiten Polymer-Lage B sicherzustellen, kann vorgesehen sein, dass die erste Polymer-Lage A neben dem wenigstens einen Dunkelpigment gleichzeitig wenigstens ein Weißpigment umfasst, beispielsweise mit einem Anteil von bis zu 10 Gew.-%, wie etwa bis zu 7,5 Gew.-% oder 7,0 Gew.-%, beispielsweise einen Gewichtsanteil in einem Bereich von 5 Gew.-% bis 10 Gew.-%, wie etwa 6 Gew.-% bis 8 Gew.-%. Während bei einer Folie ohne Weißpigment in der ersten Polymer-Lage A der Anteil des oder der Weißpigmente bezogen auf die Gesamtfolie vorzugsweise 5 Gew.-% bis 10 Gew.-% beträgt, kann im Falle einer ersten Polymer-Lage A , die wenigstens ein Weißpigment umfasst, bezogen auf die Gesamtfolie der Gewichtsanteil an Weißpigment beispielsweise bis zu 20 %, wie etwa bis zu 14 % oder bis zu 10 %, beispielsweise bis zu 7 % betragen. Durch Weißpigment in der ersten Polymer-Lage A wird erreicht, dass die erste Polymer-Lage A gegenüber einer im Vergleich dazu Weißpigment-freien ersten Polymer- Lage A bereits aufgehellt ist. Folglich wird die Erzielung einer weißen Oberfläche durch Abdeckung mittels der zweiten Polymer-Lage B vereinfacht, da diese nicht mehr eine dunkle, sondern lediglich eine bereits hellere Oberfläche abdecken muss.

Gemäß einer Ausführungsform umfasst die erste Polymer-Lage der wärmeschrumpfbaren Folie ein Polymer mit einer hohen Kristallisationshalbwertszeit. Vorteilhaft wird dadurch während der Herstellung der wärmeschrumpfbaren Folie ein Auskristallisieren des Polymers verringert oder vollständig unterbunden, welches zur Bildung optisch unschöner Stellen, beispielsweise weißlicher Stellen, führen könnte und auch die Schrumpfungseigenschaften der wärmeschrumpfbaren Folie negativ beeinflussen könnte. Die Kristallisationshalbwertszeit ist über dynamische Differenzkalorimetrie (auch als "differential scanning calorimetry", DSC, bezeichnet) ermittelbar. Zur Ermittlung der Kristallisationshalbwertszeit, die außerdem in der Patentschrift EP 01 066339 B1 im Anspruch 1 und auf Seite 3, Zeile 1-22 der Beschreibung in Bezug auf Polyester beschrieben ist, werden 15 mg eines zu messenden Polyesters auf 290 °C erwärmt, nachfolgend in Gegenwart von Helium mit einer Geschwindigkeit von 320 °C pro Minute auf eine vorbestimmte isothermale Kristallisationstemperatur gekühlt und die Zeitspanne ermittelt, die bis zum Erreichen der isothermen Kristallisationstemperatur zur bzw. des Kristallisationspeaks der DSC-Kurve erforderlich ist. Die Kristallisationshalbwertszeit lässt sich aus dem zeitabhängigen Verlauf der Kristallisation bestimmen und entspricht derjenigen Zeit, welche benötigt wird, um bei der gegebenen Temperatur in der Probe 50 % der maximal erreichbaren Kristallinität zu erhalten.

Als eine hohe Kristallisationshalbwertszeit wird eine Halbwertszeit von wenigstens 5 Minuten des entsprechenden geschmolzenen Polymers angesehen. Nicht-beschränkende Beispiele für Polyester als Beispiele für Polymere mit einer hohen Kristallisations-halbwertszeit sind Polyester aus einer oder mehreren Dicarbonsäuren und einer oder mehreren Diolen, wobei die Dicarbonsäuren ausgewählt sind aus Terephthalsäure, Maleinsäure, Itaconsäure, Phthalsäure, Naphthalindicarbonsäure, 1,3-Cyclohexandicarbonsäure, 1,4-Cyclohexandicarbonsäure, Isophthalsäure und Mischungen zweier oder mehrerer Vertreter davon, und wobei die Diole ausgewählt sind aus Diolen mit 2 bis 10 Kohlenstoffatomen und Mischungen zweier oder mehrerer Vertreter davon und/oder ausgewählt sind aus 1,3-Propandiol, 1,4-Butandiol, 1,5-Pentandiol, 1,6-Hexandiol, 1,8-Octandiol, 2,2,4-Trimethyl-1,3-Pentandiol, Propylenglycol, 2,2,4,4-Tetramethyl-1,3-Cyclobutandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl-1,3-propandiol, 1,3-Butandiol, Thiodiethanol, 1,2-Cyclohexandimethanol, 1,3-Cyclohexandimethanol und 1,4-Cyclohexandimethanol, 1,4-Benzoldimethanol. Gemäß einer besonderen Ausführungsform enthalten die Polyester mindestens 80 Mol-% einer oder mehrerer Dicarbonsäuren wie vorstehend angegeben, und weiterhin 80 bis 100 Mol-% eines oder mehrerer Diole, ausgewählt aus Diolen mit 2 bis 10 Kohlenstoffatomen und Mischungen zweier oder mehrerer Vertreter davon, und 0 bis 20 Mol-% eines modifizierenden Diols, ausgewählt aus 1,3-Propandiol, 1,4-Butandiol, 1,5-Pentandiol, 1,6-Hexandiol, 1,8-Octandiol, 2,2,4-Trimethyl-1,3-Pentandiol, Propylenglycol, 2,2,4,4-Tetramethyl-1,3-Cyclobutandiol, 2,4-Dimethyl-2-ethylhexan-1,3-diol, 2,2-Dimethyl-1,3-propandiol, 2-Ethyl-2-butyl-1,3-propandiol, 2-Ethyl-2-isobutyl-1,3-propandiol, 1,3-Butanediol, Thiodiethanol, 1,2-Cyclohexandimethanol, 1,3-Cyclohexandimethanol und 1,4-Cyclohexandimethanol, 1,4-Benzoldimethanol, wobei die Dicarbonsäure oder Dicarbonsäuren sich zu 100 Mol-% Dicarbonsäure aufaddieren und das oder die Diole sich zu 100 Mol% Diol aufaddieren. Beispiele für Polyester mit hoher Kristallisationshalbwertszeit sind handelsübliche amorphe oder halbkristalline Polyester, beispielsweise glykolmodifizierte oder Cyclohexandimethanol-modifizierte Polyethylenterephthalate. Als Beispiele können genannt werden "Embrace®" oder "Embrace® LV" der Eastman Chemical Company, wobei neben Terephthalsäure und Ethylenglykol als Comonomer eine Cyclohexandimethanol-Glykolkomponente (CHDM) verwendet wird. Weitere Beispiele werden unter den Markenbezeichnungen "Eastman Copolyester", "Eastar®" PETG, Copolyester 6763, oder Cadence® von der Eastman Chemical Company oder unter "Radicron®" von Radici Plastics, USA, vertrieben, wobei letzteres einen Neopentylglycol-modifizierten Polyester darstellt.

Mit der hierin beschriebenen Folie wird vorteilhaft eine Folie bereitgestellt, die eine sehr geringe Lichttransmission aufweist, dabei sehr dünn ist, in der einfachsten Form als zweilagige Folie herstellbar ist, und eine sehr weiße Oberfläche bereitstellt, die insbesondere bei nachträglich aufgebrachten Bedruckungen eine Farbverfälschung minimiert.

Gemäß einer besonderen Ausführungsform umfasst die zweite Polymer-Lage B ein Polymer mit hoher Kristallisationshalbwertszeit. Gemäß einer noch weiteren Ausführungsform umfassen sowohl die erste Polymer-Lage A als auch die zweite Polymer-Lage B unabhängig voneinander ein Polymer mit hoher Kristallisations-halbwertszeit. Das oder die Polymere mit hoher Kristallisationshalbwertszeit der ersten Polymer-Lage A und der zweiten Polymer-Lage B können identisch oder unterschiedlich sein, und sind gemäß einer besonderen Ausführungsform identisch.

Gemäß einer Ausführungsform weist die zweite Polymer-Lage B der wärmeschrumpfbaren Folie einen L*-Wert von wenigstens 85 auf. Der L*-Wert bezieht sich auf den dem Fachmann bekannten, von der Internationalen Beleuchtungskommission (CIE, "Commisison internationale de l'eclairage") standardisierten L*a*b*-Farbraum, bei dem die L*-Achse die Helligkeit, die a*-Achse den Verlauf des Grün- oder Rotanteils und die b*-Achse den Verlauf des Blau- oder Gelbanteils einer Farbe bezeichnet. Eine von der zweiten Polymer-Lage B gebildete Oberfläche mit einem derartigen L*-Wert von wenigstens 85 ist besonders geeignet als Untergrund für das Aufbringen einer Pigmentlage, etwa im Rahmen einer Bedruckung, wobei die Farbe oder Farben der Pigmentlage durch die zweite Polymer-Lage B nicht oder nicht wesentlich verdunkelt oder verfälscht wird. Der L*-Wert beträgt beispielsweise wenigstens 87, und/oder liegt beispielsweise in einem Bereich von 87 bis 95, wie etwa 88 bis 94, 89 bis 93 oder 90 bis 92.

Gemäß einer Ausführungsform ist wenigstens eine der voneinander abgewandten Oberflächen der ersten Polymer-Lage A und der zweiten Polymer-Lage B glatt. Vorzugsweise sind beide Oberflächen glatt. Unter einer glatten Oberfläche wird eine Oberfläche verstanden, deren Oberflächenrauheit Rz weniger als 1,5 μm und/oder deren Glanzwert bei 60° mehr als 80 beträgt, gemessen nach DIN 67530. Eine glatte Oberfläche ist vorteilhaft geeignet für wärmeschrumpfbare Folien, die einen Hochglanzeindruck erwecken sollen oder mit einer extrem detailreichen Bedruckung versehen werden sollen. Derartige glatte Oberflächen der ersten Polymer-Lage A und der zweiten Polymer-Lage B sind herstellbar, indem die entsprechenden Polymerlagen vorzugsweise frei von Hohlräumen sind und möglichst auch frei von Partikeln sind. Die Dichte entsprechender glatter Polymer-Folien liegt bei Polyester-Folien beispielsweise im Bereich von 1,30 bis 1,50 g/cm³, wie etwa 1,40 bis 1,45 g/cm³, beispielsweise bei etwa 1,42 g/cm³.

Gemäß einer weiteren Ausführungsform weist die zweite Polymer-Lage B eine Rauheit Rz von mehr als 2,0 μm auf, beispielsweise eine Rauheit Rz im Bereich von 4-6 μm. Eine derartige Rauheit bewirkt eine vorteilhafte Haptik der Oberfläche der zweiten Polymer-Lage B, die dazu führt, dass die Folie nicht rutschig-glatt ist, sondern eher eine papierähnliche Haptik aufweist. Wird ein Gegenstand mit einer solchen wärmeschrumpfbaren Folie umhüllt, wobei die erste Polymer-Lage A zum Gegenstand hin weist, und deren Haptik insofern irrelevant ist, wohingegen zweite Polymer-Lage B vom Gegenstand weg weist, also nach außen weist, sodass deren Oberfläche von einem Verwender des Gegenstands gegriffen wird, so liegt der Gegenstand aufgrund des Kontakts zwischen der zweiten Polymer-Lage B und der Hand des Verwenders vergleichsweise rutschsicher in der Hand. Alternativ oder zusätzlich weist die Folie eine Peak-Anzahl im Bereich von 120 bis 400 Peaks/cm, beispielsweise 150-350 Peaks/cm, und/oder einen Glanz, gemessen bei 60°, von weniger als 10, beispielsweise 2,5 bis 8,5, oder 3,0 bis 7,0, oder 4 bis 6, wie beispielsweise 5, auf. Die erste Polymer-Lage A kann eine glatte Oberfläche aufweisen, oder ebenfalls eine raue Oberfläche, deren Rauheit Rz verglichen mit der Rauheit Rz der zweiten Polymer-Lage B identisch ist oder abweichend davon sein kann. Beispielsweise weisen beide Oberflächen eine Rz von mehr als 2 μm auf.

Eine entsprechende Oberflächenrauheit ist beispielsweise bereitstellbar, indem die wärmeschrumpfbare Folie bei deren Herstellung durch ein Walzenpaar aus einer normalen Walze mit glatter Oberfläche und einer Prägewalze geführt wird, wobei die zweite Polymer-Lage B der Prägewalze zugewandt ist, sodass die Prägewalze der zweiten Polymer-Lage B eine entsprechende Oberflächenrauheit verleiht. Alternativ oder zusätzlich lässt sich eine Oberflächenrauheit durch die Bestandteile der ersten beziehungsweise der zweiten Polymer-Lagen A bzw. B bereitstellen.

Dementsprechend ist in einer Ausführungsform vorgesehen, dass die Polymer-Lage B Hohlräume umfasst. Die Hohlräume weisen vorzugsweise eine Haupterstreckung im Bereich von 0,1 bis 100 μm, wie etwa 0,5 μm bis 25 μm, 0,5 μm bis 10 μm oder 1 μm bis 5 μm auf. Die durch Hohlräume bedingte Porosität der wärmeschrumpfbaren Folie beträgt vorzugsweise 5 bis 40 Volumenprozent, beispielsweise 10 bis 30 Volumenprozent, wie etwa 15 bis 20 Volumenprozent. Dem Fachmann sind verschiedene Verfahren zur Erzeugung von Hohlräumen in Polymeren bekannt, beispielsweise das Einbringen von Gas unter erhöhtem Druck in ein entsprechendes Polymer während des Herstellungsverfahrens und anschließendes Entspannen, oder das Einbringen gasfreisetzender Reagenzien während des Herstellungsverfahrens. Ein weiteres Verfahren besteht in der Bereitstellung eines Gemisches von Polymeren, die aufgrund unterschiedlicher Oberflächenspannungen und/oder Schmelzviskositäten inkompatibel sind, und einem Verstrecken dieses Gemisches bei entsprechenden Temperaturen, bei denen diese Effekte zum Tragen kommen. Ein Polymer stellt dabei ein Basismaterial dar, dem ein hohlraumbildendes Additiv in Form eines zweiten Polymers oder Polymergemisches mit unterschiedlicher Oberflächenspannung und/oder Schmelzviskosität, welches mit dem Polymer des Basismaterials unverträglich ist, als hohlraumbildendes Mittel beigemischt wird. Letztlich stellt die Kombination aus dem Basismaterial und dem hohlraumbildenden Additiv ein Gemisch dar, das beim Verstrecken zur Bildung von Hohlräumen neigt. Beispielsweise macht das Polymer des Basismaterials, bezogen auf eine Polymerlage wie etwa die erste Polymer-Lage A oder die zweite Polymer-Lage B, 60-95 Gew.-% der jeweiligen Polymer-Lage aus, und das als hohlraumbildendes Mittel hinzugefügte Additiv, beispielsweise ein Polymer oder Polymergemisch, macht in der gleichen Lage bis zu 40 Gew.-%, beispielsweise bis zu 30 Gew.-%, wie etwa 5 bis 30 Gew.-%, oder insbesondere 5 bis 25 Gew.-% aus. Derartige Systeme sind dem Fachmann beispielsweise im Bereich der Polyester bekannt und beschrieben in den Patenten EP 1692226 B1, EP 169227 B1 und EP 1833886 B1. Bezogen auf das Gesamtgewicht der jeweiligen Polymer-Lage können beispielsweise bis zu 15 Gew.-% auf das wenigstens eine Dunkelpigment bzw. das wenigstens eine Weißpigment und/oder weitere Additive entfallen.

Ist die wärmeschrumpfbare Folie als Polyester-Folie ausgeführt, so ist ein Beispiel für ein Polyester-Basismaterial für die Polyester-Lage B der von der Eastman Chemical Company vertriebene Polyester Embrace™ LV. Dieses Basismaterial macht gemäß den obigen Ausführungen beispielsweise einen Anteil von 60 bis 95 Gew.-% der Polyester-Lage aus. Diesem Basismaterial wird das hohlraumbildende Additiv Embrace™ HY 1000 der Eastman Chemical Company zugemischt, beispielsweise in einem Anteil von bis zu 40 Gew.-%, beispielsweise bis zu 30 Gew.-%, wie etwa 5 bis 30 Gew.-%, insbesondere 5 bis 25 Gew.-%, wie etwa 15 Gew.-% bis 22 Gew.-% oder 17 Gew.-% bis 20 Gew.-%. Im Rahmen der Herstellung einer wärmeschrumpfbaren Folie wird eine Vorfolie, welche die erste Polyester-Lage A und die zweite Polyester-Lage B umfasst, verstreckt, wobei der Polyester vom Typ Embrace™ HY 1000 innerhalb des Polyesters vom Typ Embrace™ LV aufgrund unterschiedlicher Oberflächenspannungen und/oder Schmelzviskositäten Hohlräume bildet.

Befinden sich entsprechende Hohlräume an der Oberfläche der zweiten Polyester-Lage B einer wärmeschrumpfbaren Folie, so führt die kuppelartige oder auch eingesunkene oder gewellte Abdeckung der Hohlräume vorteilhaft zu einer papierähnlichen Haptik. Bei Verwendung von Polymeren mit unterschiedlichen Schmelzviskositäten und/oder Oberflächenspannungen werden die Hohlräume, die zu einer entsprechenden papierähnlichen Haptik führen, zwangsläufig im Zuge des Verstreckens erzeugt, wodurch vorteilhaft sichergestellt ist, dass die wärmeschrumpfbare Folie tatsächlich entsprechende Hohlräume aufweist.

Unabhängig von der Art der Erzeugung von Hohlräumen führt die durch die Hohlräume bedingte Porosität zu Lichtstreuungs- und Lichtreflexionseffekten, so dass Licht, welches an einer Oberfläche in die zweite Polymer-Lage B eingestrahlt wird, nicht ungehindert zur gegenüberliegenden Oberfläche gelangen kann. Vielmehr wird das Licht zumindest teilweise innerhalb der zweiten Polymer-Lage B umgelenkt, was der angestrebten niedrigen Lichttransmission der Folie von maximal 12 % zugute kommt. Weiterhin tragen die Hohlräume vorteilhaft zu einer Verringerung der Dichte der wärmeschrumpfbaren Folie bei, sodass diese insgesamt leichter ist, was wiederum die Lagerung, den Transport und die weitere Handhabbarkeit der Folie erleichtert.

Die Dichte hohlraumhaltiger Polymer-Folien liegt beispielsweise, insbesondere auf Polyester-Folien bezogen, im Bereich von 0,90 bis 1,40 $g/cm^3$, wie etwa 1,00 bis 1,20 $g/cm^3$.

Die erste Polymer-Lage A kann frei von Hohlräumen sein oder ebenfalls Hohlräume aufweisen. Eine erste Polymer-Lage A mit Hohlräumen verstärkt die vorstehend angesprochenen vorteilhaften Effekte der geringeren Lichttransmission und der Verringerung der Dichte. Sofern die erste Polymer-Lage A ebenfalls Hohlräume aufweist, kann deren durch die Hohlräume bedingte Porosität verschieden sein von der Porosität der zweiten Polymer-Lage B.

Gemäß einer besonderen Ausführungsform weisen jedoch die erste Polymer-Lage A und die zweite Polymer-Lage B eine identische Porosität auf. Insbesondere wenn die erste Polymer-Lage A und die zweite Polymer-Lage B im Wesentlichen auf den gleichen Polymeren basieren, so lässt sich im Falle einer direkt an die erste Polymer-Lage A angrenzenden zweiten Polymer-Lage B die Lagenhaftung zwischen diesen beiden Lagen verbessern, wenn beide Lagen weitgehend identische Bestandteile umfassen. Im Falle von wärmeschrumpfbaren Folien, bei denen die Hohlräume in der zweiten Polymer-Lage B aufgrund eines Gemisches zweier Polymere mit unterschiedlichen Schmelzviskositäten und/oder Oberflächenspannungen ausgebildet ist, ist es somit vorteilhaft, wenn in der ersten Polymer-Lage A ebenfalls ein vergleichbares Gemisch vorliegt. Weiterhin weisen in diesem Fall beide Lagen vorteilhaft ungefähr die gleichen Zugfestigkeiten auf, im Gegensatz zu wärmeschrumpfbarer Folie mit unterschiedlicher Porosität in zwei verschiedenen Lagen, bei denen die Lage mit der größeren Porosität aufgrund der durch die Hohlräume bedingten strukturellen Schwächung eine geringere Zugfestigkeit aufweist. Gemäß einer Ausführungsform ist die wärmeschrumpfbare Folie auf ihrer zweiten Polymer-Lage B bedruckbar. Es wurde festgestellt, dass auch Ausführungsformen mit einer papierähnlichen Haptik, die eine entsprechende Rauheit aufweisen, beispielsweise eine Rauheit Rz im Bereich von 4 bis 6 $\mu$m, eine gute Bedruckbarkeit aufweisen. Dementsprechend haftet Druckfarbe gut an der Oberfläche, wobei gleichzeitig die eine Rauheit aufweisende Oberfläche ein Drucken von Motiven mit ausreichender Detailtreue zulässt. Für eine Bedruckung vor einem Wärmeschrumpfen der Folie werden die Proportionen des Motivs der Bedruckung vorzugsweise so gewählt, dass das Motiv nach vollzogener Wärmeschrumpfung der wärmeschrumpfbaren Folie korrekt wiedergegeben wird.

Gemäß einer Ausführungsform umfassen die erste Polymer-Lage A und die zweite Polymer-Lage B der wärmeschrumpfbaren Folie unabhängig voneinander einen Polyester, womit auch Polyestergemische umfasst sind. Der Polyester der ersten Polymer-Lage A und der Polyester der zweiten Polymer-Lage B sind unabhängig voneinander, können also gleich oder unterschiedlich sein. Der Polyester der ersten Polymer-Lage A bzw. der zweiten Polymer-Lage B stellt, bezogen auf den Gewichtsanteil innerhalb der jeweiligen Lage, das Haupt-Polymer dar, sodass gegebenenfalls vorhandene, von Polyestern abweichende Polymere mit einem geringeren Gewichtsanteil innerhalb der jeweiligen Polymer-Lage vorliegen. Vorzugsweise macht der Polyester wenigstens 50 Gew.-% der jeweiligen Polymer-Lage aus, insbesondere mindestens 70 Gew-%, mindestens 75 Gew.-%, mindestens 80 Gew.-% , mindestens 85 Gew.-% oder mindestens 90 Gew.-%. Gemäß einer besonderen Ausführungsform sind keine von Polyestern abweichenden Polymere in der jeweiligen Polymer-Lage vorhanden. Das wenigstens eine Dunkelpigment ist vorzugsweise in der wärmeschrumpfbaren Folie in einem Gewichtsanteil von 0,3 Gew.-% bis 1,5 Gew.-%, gemäß einer besonderen Ausführungsform mit einem Gewichtsanteil von 0,3 Gew.-% bis 1,0 Gew.-% enthalten.

Die erste Polyester-Lage A und/oder die zweite Polyester-Lage B umfassen gemäß einem besonderen Beispiel für eine hohlraumhaltige wärmeschrumpfbare Folie den von der Eastman Chemical Company vertriebenen Polyester Embrace™ LV als Basismaterial oder bestehen daraus. Dieses Basismaterial macht beispielsweise einen Anteil von 60 bis 95 Gew.-% der jeweiligen Polyester-Lage A oder B aus. Diesem Basismaterial wird das hohlraumbildende Additiv Embrace™ HY 1000 der Eastman Chemical Company zugemischt, beispielsweise in einem Anteil von bis zu 40 Gew.-%, beispielsweise bis zu 30 Gew.-%, wie etwa 5 bis 30 Gew.-%, insbesondere 5 bis 25 Gew.-%. Im Rahmen der Herstellung einer wärmeschrumpfbaren Folie wird eine Vorfolie, welche die erste Polyester-Lage A und die zweite Polyester-Lage B umfasst, verstreckt, wobei - wie vorstehend schon ausgeführt - das dem Polyester vom Typ Embrace™ LV zugemischte Additiv Embrace™ HY 1000 innerhalb des Embrace™ LV aufgrund unterschiedlicher Oberflächenspannungen und/oder Schmelzviskositäten Hohlräume bildet.

Die durch die Hohlräume bedingte Opazität trägt zu einer geringen Lichttransmission bei, verringert anderseits jedoch die Steifigkeit der Folie, was sich insbesondere dann nachteilig auswirkt, wenn die Folie im Rahmen einer möglichen Weiterverarbeitung, beispielsweise bei der Bildung eines Schlauchs und/oder dem Umhüllen eines Gegenstands, schlecht handhabbar wird. Da im Rahmen der hierin vorgesehenen wärmeschrumpfbaren Folien die erste Polyester-Lage A wenigstens ein Dunkelpigment umfasst, mit dem eine hervorragend geringe Lichttransmission zu bewerkstelligen ist, wurde festgestellt, dass ein geringer Anteil von nicht mehr als 25 bis 30 Gew.-% Embrace™ HY 1000 ausreichend ist, wobei die erhaltene wärmeschrumpfbare Folie vorteilhaft eine hohe Steifigkeit aufweist, die nicht durch eine zu hohe Porosität beeinträchtigt wird, und dennoch eine geringe Dichte aufweist.

Gemäß einer Ausführungsform umfassen die erste Polymer-Lage A und die zweite Polymer-Lage B der wärmeschrumpfbaren Folie unabhängig voneinander ein Polyolefin, womit auch Polyolefingemische umfasst sind. Das Polyolefin der ersten Polymer-Lage A und der zweiten Polymer-Lage B sind unabhängig voneinander, können also gleich oder unterschiedlich sein. Das Polyolefin der ersten Polymer-Lage A bzw. der zweiten Polymer-Lage B stellt, bezogen auf den Gewichtsanteil innerhalb der jeweiligen Lage, das Haupt-Polymer dar, sodass gegebenenfalls vorhandene, von Polyolefinen abweichende Polymere mit einem geringeren Gewichtsanteil innerhalb der jeweiligen Polymer-Lage vorliegen. Vorzugsweise macht das Polyolefin wenigstens 50 Gew.-% der jeweiligen Polymer-Lage aus, insbesondere mindesten 70 Gew-%, mindestens 75 Gew.-%, mindestens 80 Gew.-% , mindestens 85 Gew.-% oder mindestens 90 Gew.-%. Gemäß einer besonderen Ausführungsform sind keine von Polyolefinen abweichenden Polymere in der jeweiligen Polymer-Lage vorhanden. Das wenigstens eine Dunkelpigment ist vorzugsweise in der wärmeschrumpfbaren Folie in einem Gewichtsanteil von 0,3 Gew.-% bis 1,5 Gew.-%, gemäß einer besonderen Ausführungsform mit einem Gewichtsanteil von 0,3 Gew.-% bis 1,0 Gew.-% enthalten.

Gemäß besonderen Beispielen handelt es sich bei den Polyolefinen um Polyethylen, insbesondere PE-LD und/oder PE-LLD, die gegebenenfalls als Comonomere noch Vinylazetat, Acrylate und/oder Acrylsäure umfassen.

Gemäß einer Ausführungsform umfassen die erste Polymer-Lage A und die zweite Polymer-Lage B der wärmeschrumpfbaren Folie unabhängig voneinander ein Polystyrol, womit auch Polystyrolgemische umfasst sind. Das Polystyrol der ersten Polymer-Lage A und der zweiten Polymer-Lage B sind unabhängig voneinander, können also gleich oder unterschiedlich sein. Das Polystyrol der ersten Polymer-Lage A bzw. der zweiten Polymer-Lage B stellt, bezogen auf den Gewichtsanteil innerhalb der jeweiligen Lage, das Haupt-Polymer dar, sodass gegebenenfalls vorhandene, von Polystyrolen abweichende Polymere mit einem geringeren Gewichtsanteil innerhalb der jeweiligen Polymer-Lage vorliegen. Vorzugsweise macht das Polystyrol wenigstens 50 Gew.-% der jeweiligen Polymer-Lage aus, insbesondere mindestens 70 Gew-%, mindestens 75 Gew.-%, mindestens 80 Gew.-%, mindestens 85 Gew.-% oder mindestens 90 Gew.-%. Gemäß einer besonderen Ausführungsform sind keine von Polystyrolen abweichenden Polymere in der jeweiligen Polymer-Lage vorhanden. Das wenigstens eine Dunkelpigment ist vorzugsweise in der wärmeschrumpfbaren Folie in einem Gewichtsanteil von 0,3 Gew.-% bis 1,5 Gew.-%, gemäß einer besonderen Ausführungsform mit einem Gewichtsanteil von 0,3 Gew.-% bis 1,0 Gew.-% enthalten.

Gemäß besonderen Beispielen handelt es sich bei den Polystyrolen um Styrol-Butadien-Copolymere, die unter der Bezeichnung "Clearen 511L", "Clearen 631M" oder "Clearen 740M" von der Denka Kagaku Kogyo Kabushiki Kaisha (Tokyo, Japan), das "K-Resin® SBC" von Chevron Phillips Chemical Company LLC (The Woodlands, Texas, USA) vertrieben werden, und/oder um verschiedene, unter der Markenbezeichnung "Styrolux" von der Styrolution GmH (Frankfurt, Deutschland) angebotene Styrol-Butadien-Copolymere, und/oder um das System aus "Styrolux S" und "Styrolux T" der Styrolution GmH (Frankfurt, Deutschland).

Gemäß einer Ausführungsform umfassen die erste Polymer-Lage A und die zweite Polymer-Lage B der wärmeschrumpfbaren Folie unabhängig voneinander ein Polyvinylhalogenid, womit auch Polyvinylhalogenidgemische umfasst sind. Das Polyvinylhalogenid der ersten Polymer-Lage A und der zweiten Polymer-Lage B sind unabhängig voneinander, können also gleich oder unterschiedlich sein. Das Polyvinylhalogenid der ersten Polymer-Lage A bzw. der zweiten Polymer-Lage B stellt, bezogen auf den Gewichtsanteil innerhalb der jeweiligen Lage, das Haupt-Polymer dar, sodass gegebenenfalls vorhandene, von Polyvinylhalogenide abweichende Polymere mit einem geringeren Gewichtsanteil innerhalb der jeweiligen Polymer-Lage vorliegen. Vorzugsweise macht das Polyvinylhalogenid wenigstens 50 Gew.-% der jeweiligen Polymer-Lage aus, insbesondere mindestens 70 Gew-%, mindestens 75 Gew.-%, mindestens 80 Gew.-%, mindestens 85 Gew.-% oder mindestens 90 Gew.-%. Gemäß einer besonderen Ausführungsform sind keine von Polyvinylhalogeniden abweichenden Polymere in der jeweiligen Polymer-Lage vorhanden. Das wenigstens eine Dunkelpigment ist vorzugsweise in der wärmeschrumpfbaren Folie in einem Gewichtsanteil von 0,3 Gew.-% bis 1,5 Gew.-%, gemäß einer besonderen Ausführungsform mit einem Gewichtsanteil von 0,3 Gew.-% bis 1,0 Gew.-% enthalten.

Gemäß besonderen Beispielen handelt es sich bei den Polyvinylhalogeniden um Polyvinylchloride. Vorzugsweise enthalten die erste Polymer-Lage A, die entsprechend eine erste Polyvinylhalogenid-Lage A und insbesondere eine erste Polychlorid-Lage A darstellt, bzw. zweite Polymer-Lage B, die entsprechend eine zweite Polyvinylhalogenid-Lage B und insbesondere eine zweite Polyvinylchlorid-Lage B darstellt, unabhängig voneinander bis zu 25 Gew.-% eines oder mehrerer weiterer Polymere, die ausgewählt sind unter Acrylnitril-Butadien-Styrol, Methylmethacrylat-Acrylnitril-Butadien-Styrol, chloriertem Polyethylen, Methylmethacrylat-Butadien-Styrol, Methylmethacrylat, Polymethylmethacrylat und Ethylen-Vinylacetat.

Die Aufgabe ist gemäß einem weiteren Aspekt gelöst durch einen Schlauch, der eine wärmeschrumpfbare Folie wie vorstehend beschrieben umfasst. Der Schlauch kann gemäß einem an sich fachbekannten Vorgehen hergestellt werden, indem zwei Kanten einer wärmeschrumpfbaren Folie miteinander verbunden werden Beispielsweise erfolgt eine Herstellung, ausgehend von einer wärmeschrumpfbaren Folie, durch Heisssiegeln oder Lösungssiegeln, wobei die wärmeschrumpfbare Folie dementsprechend durch Hitze oder durch Lösungsmittel versiegelbar ist. Da das Dunkelpigment einen integralen Bestandteil der ersten Polyester-Lage A darstellt und nicht nur in Form einer oberflächlichen Schicht auf der ersten Polyester-Lage A aufgebracht ist, wird sichergestellt, dass nach einer Verbindung der ersten Polyester-Lage A mit der zweiten Polyester-Lage B oder mit der ersten Polyester-Lage A der gegenüberliegenden Kante der wärmeschrumpfbaren Folie im Rahmen des Siegelns weiterhin eine intakte oder weitgehend intakte Lage mit Dunkelpigment in dem erhaltenen Schlauch vorhanden ist. Die geringe Lichttransmission der wärmeschrumpfbaren Folie bleibt somit gewährleistet. Alternativ wird eine entsprechende wärmeschrumpfbare Folie als Blasfolie hergestellt, die im Rahmen des Herstellungsverfahrens aus einer Ringsdüse eines Extruders austritt.

Ein derartiger Schlauch kann verwendet werden, um in fachbekannter Weise einen Gegenstand zu umhüllen, wobei sich der Schlauch durch Wärmebehandlung zusammenzieht und an die Kontur des Gegenstands anpasst.

Die Aufgabe ist gemäß einem weiteren Aspekt gelöst durch einen Gegenstand, der ausgestattet ist mit einer wärmeschrumpfbaren Folie oder einem Schlauch wie hierin beschrieben. Alternativ kann der Gegenstand eine derartige Folie bzw. einen derartigen Schlauch nach deren Wärmeschrumpfung aufweisen, also eine wärmegeschrumpfte Folie oder einen Schlauch, die bzw. der gemäß einem fachüblichen Vorgehen durch Aufziehen auf den Gegenstand und anschließende Temperaturbehandlung zur Herbeiführung einer Schrumpfung auf den Gegenstand aufgebracht wurde. Vorzugsweise umhüllt die Folie bzw. der Schlauch den Gegenstand, beispielsweise eine Flasche oder eine Dose, wenigstens teilweise und schützt die von ihr bedeckte Oberfläche des Gegenstands wirksam vor Lichteintritt. Ein Gegenstand, der mit einer wärmeschrumpfbaren Folie oder einem Schlauch wie hierin beschrieben ausgestattet ist, lässt sich in vorteilhafter Weise besser einem Recycling zuführen. Bei herkömmlichen Lösungen sind die Gegenstände (beispielsweise Nahrungsmittelbehälter) entweder selbst aus einem lichtundurchlässigen Material gefertigt oder sind selbst zwar transparent, jedoch mit einer entsprechenden lichtundurchlässigen Druckschicht versehen. Folglich werden beim Recycling selbst nur lichtundurchlässige Materialien erhalten, oder das ehemals transparente Material verliert seine Transparenz, wenn es im Rahmen eines Recyclingprozesses aufgeschmolzen wird und die Druckschicht dann mit dem transparenten Material vermischt wird. Im Gegensatz dazu stellen hierin beschriebenen wärmeschrumpfbaren Folien oder die daraus gefertigten Schläuche eine Möglichkeit bereit, einen transparenten Gegenstand lichtundurchlässig zu machen. Im Rahmen eines Recyclings des Gegenstands kann das Material der Folien bzw. Schläuche jedoch über an sich fachbekannte Verfahren von dem Material des transparenten Gegenstands abgetrennt werden, beispielsweise aufgrund unterschiedlicher Dichten, sodass das transparente Material des Gegenstands auch nach dem Recyclingprozess weiterhin als transparentes Material verwendbar ist.

Gemäß einer Ausführungsform weist der Gegenstand eine wärmeschrumpfbare Folie wie vorstehend beschrieben und/oder einen Schlauch wie vorstehend beschrieben auf, wobei die erste Polyester-Lage A zum Gegenstand weist und die zweite Polyester-Lage B vom Gegenstand weg weist. Die zweite Polyester-Lage B befindet sich damit frei zugänglich an der Oberfläche des Gegenstands, womit die Oberfläche der zweiten Polyester-Lage B bedruckbar ist oder eine bereits aufgebrachte Bedruckung für einen Verwender des Gegenstands gut sichtbar ist. Die zweite Polyester-Lage B absorbiert zumindest einen Teil des einfallenden Lichts und/oder lenkt dieses um. Dementsprechend gelangt bereits ein geringerer Anteil an Licht zur ersten Polyester-Lage A, die an den Gegenstand angrenzt und durch ihren Anteil an Dunkelpigment weitgehend zur Verringerung der Transmission beiträgt, und somit den Gegenstand vor Lichteinfall schützt.

Die Aufgabe ist in einem weiteren Aspekt gelöst durch ein Verfahren zur Herstellung einer wärmeschrumpfbaren Folie wie hierin beschrieben, wobei das Verfahren ein Bereitstellen eines ersten Polymers A, das wenigstens ein Dunkelpigment umfasst, ein Bereitstellen eines zweiten Polymers B, das wenigstens ein Weißpigment umfasst, ein Coextrudieren einer Vorfolie, umfassend eine erste Polymer-Lage A und eine zweite Polymer-Lage B, ein Einstellen der Vorfolie auf eine Strecktemperatur, und ein Verstrecken der Vorfolie unter Erhalt einer wärmeschrumpfbaren Folie umfasst.

Das bereitgestellte erste Polymer A und das bereitgestellte zweite Polymer B werden gegebenenfalls mit weiteren Komponenten wie Additiven vorzugsweise einem Extruder zugeführt, in welchem sie gemäß einem an sich fachbekannten Vorgehen geschmolzen und erforderlichenfalls homogenisiert werden, und mit einem entsprechenden Druck zu einem Feedblock befördert werden. In dem Feedblock, auch als Co-Extrusionsadapter bezeichnet, werden die beiden Schmelzeströme definiert zusammengeführt und über eine Breitschlitzdüse zu einem flächigen Schmelzefilm ausgeformt. Sofern die wärmeschrumpfbare Folie neben der ersten Polymer-Lage A und der zweiten Polymer-Lage B weitere Lagen aufweist, die Polymere umfassen, werden entsprechende Schmelzeströme erzeugt, zusammengeführt und treten über die Breitschlitzdüse aus. Alternativ können im Rahmen einer sogenannten Düsen-Coextrusion die Schmelzeströme nicht bereits lange vor dem Austritt in einem Feedblock zusammengeführt werden, sondern werden erst unmittelbar vor dem Austritt aus dem Extruder in einer Co-Extrusionsdüse vereinigt. Dieser Schmelzefilm wird an eine Kühlwalze übergeben, mit der von der Drehgeschwindigkeit der Kühlwalze vorgegebenen Geschwindigkeit aus der Düse abgezogen, wodurch eine Vorfolie, umfassend eine erste Polymer-Lage A des ersten Polymers A und eine zweite Polymer-Lage B des zweiten Polymers B, erhalten wird, die unter die Glastemperatur abgekühlt wird.

Gemäß einer ersten Verfahrensvariante wird die abgekühlte Vorfolie noch innerhalb der gleichen Produktionsanlage wieder auf eine definierte Strecktemperatur erwärmt, einer Streckeinheit zugeführt, und unter den jeweils vorgegebenen Streckparametern verstreckt. Die Verstreckung kann in Maschinenrichtung (Längsrichtung) und/oder in Transversalrichtung (Querrichtung) erfolgen. Ein Verstrecken in Maschinenrichtung erfolgt üblicherweise durch zwei oder mehrere mit unterschiedlicher Geschwindigkeit laufender Walzenpaare, ein Verstrecken in Transversalrichtung üblicherweise durch Aufspannen der Ränder der Folie auf einen Kluppenrahmen und Vergrößern des Abstands der Ränder mittels des Kluppenrahmens. Nach dem Verstrecken wird die Folie wieder auf eine Temperatur unterhalb der Glasübergangstemperatur abgekühlt, um die durch das Verstrecken der Folie erzielte Orientierung der Polyestermoleküle sozusagen zu konservieren, und stellt somit eine wärmeschrumpfbare Folie dar. Anschließend wird die Folie aufgewickelt und kann beispielsweise ausgeliefert werden, vorher gegebenenfalls noch entsprechend konfektioniert werden oder bedruckt werden.

Gemäß einer zweiten Verfahrensvariante wird die von der Kühlwalze der Produktionsanlage entnommene Vorfolie aufgewickelt und zu einer Streckeinheit gebracht. Die Vorfolie wird in der Streckeinheit wieder abgewickelt, auf eine definierte Strecktemperatur erwärmt und wird auch schon gemäß der ersten Verfahrensvariante gemäß den jeweils vorgegebenen Streckparametern verstreckt. Das Verstrecken erfolgt dementsprechend zeitlich und/oder räumlich getrennt von der Herstellung der Vorfolie. Anschließend erfolgt wiederum ein Abkühlen auf eine Temperatur unterhalb der Glasübergangstemperatur, ein Aufwickeln, und gegebenenfalls ein Ausliefern, Konfektionieren und/oder Bedrucken der wärmeschrumpfbaren Folie.

Die definierte Strecktemperatur liegt oberhalb der Glasübergangstemperatur sowohl des ersten Polymers A als auch des zweiten Polymers B, und ist beispielsweise 5 °C bis 30 °C höher als die jeweils höhere der beiden Glasübergangstemperaturen. Das Verstrecken erfolgt vorzugsweise mit einem Streckfaktor, der in einem Bereich von 2:1 bis 7:1 liegt, also einer Verstreckung auf die doppelte bis siebenfache Länge der ursprünglichen Länge, beispielsweise in einem Bereich von 3,0:1 bis 6,5:1, wie etwa 4:1 bis 6:1 oder etwa 5:1.

Beispiele

Im Rahmen der Beispiele wurden, soweit erforderlich, folgende Messverfahren zu Grunde gelegt:

Bestimmung der Schrumpfung

Im Rahmen der vorliegenden Erfindung bezeichnet die Angabe der Schrumpfung S[%] in der Einheit Prozent die Differenz zwischen der Länge der Folie in der jeweiligen Schrumpf- bzw. Streckrichtung vor dem Schrumpfen und nach dem Schrumpfen, bezogen auf die Länge vor dem Schrumpfen:

$$S[\%] = ((\text{Länge vor der Schrumpfung} - \text{Länge nach der Schrumpfung}) / (\text{Länge vor der Schrumpfung})) * 100.$$

Die Schrumpfung wird ausgelöst, in dem eine rechteckige Folie mit bekannter Ausgangslänge, beispielsweise mit einer Kantenlänge von 100 mm x 100 mm, deren Kanten parallel zur Maschinenrichtung bzw. zur Transversalrichtung verlaufen, in ein Wasserbad mit einer Temperatur von 95 °C gegeben wird und deren Länge nach 15 Sekunden Aufenthalt in diesem Wasserbad und anschließender Entnahme mittels eines Lineals bestimmt wird.

Bestimmung der Dicke

Die Dicke wird in Anlehnung an DIN 53370 mittels eines Tastgeräts der Firma Mitutoyo, Japan, Typ 543/250 B bestimmt. Bei den Punktmessungen wurde die Folie zwischen den geöffneten Messflächen des Tastgerätes eingelegt, die dann anschließend stossfrei geschlossen wurden. Die Dicke wurde von dem Tastgerät abgelesen.

Transmission

Die Bestimmung der Transmission erfolgt mittels des Messgeräts "BYK-Gardner haze-gard plus" (Hersteller: BYK-Gardner, Deutschland). Dabei wurde die Lichtquelle D65 verwendet und die totale Transmission gemäß der Norm ASTM 1003 gemessen, wobei ein Spektralbereich von 400 nm bis 750 nm zu Grunde gelegt und ein integraler Transmissionswert für den sichtbaren Bereich erhalten wurde. Zur Messung der spektralen Transmission sowohl im sichtbaren Bereich als auch im UV-Bereich (360 Nanometer bis 750 nm) wurde das Spektralfotometer "color i7" (X-Rite, Grand Rapids, USA) im Transmissionsmodus verwendet, um zu verifizieren, dass die erforderliche geringe Transmissionswerte im gesamten Spektralbereich eingehalten wurden.

Bestimmung des Weißgrads

Zur Bestimmung des Weißgrads wurde der L*-Wert des CIE-L*a*b*-Farbraums gemäß der Normenfamilie DIN 5033 ermittelt. Dafür wurde das Farb-Spektralfotometer "color i7" (Hersteller: x-Rite) mit der Messmethode "Reflexion" in einem Meßwellenbereich von 400 nm bis 750 nm verwendet, wobei die Probe mit Standardweiß (Hintergrund) unterlegt war.

Rauheit

Die Messung der Rauheit erfolgt nach DIN EN ISO 4287. Verwendet wurden dabei ein Hommel Tester T8000 der Hommelwerke GmbH (Villingen-Schwenningen, Deutschland) und ein Taster TKT 100/17; oder ein Perthometer Typ S2 und zwei Kufentaser RT 50 und RT 250, Hersteller Mahr GmbH, Deutschland. Vermessen wurden jeweils staub- und fettfreie, möglichst plane Probekörper einer Abmessung von etwa DIN A6, die ohne weitere Vorbehandlung vermessen wurden. Bestimmt wurde die gemittelte Rautiefe Rz, als Mittelwert aus fünf Einzelrauhtiefen gemäß der Norm EN ISO 4287.

Bestimmung des Glanzes

Glanz-Werte bei 60° wurden gemäß DIN 67530 bestimmt.
Hohlraum-Anteil (Poren-Anteil)

Der prozentuale Anteil der Hohlräume in erfindungsgemäßen Folien, bei denen sich Hohlräume erst nach dem Verstrecken bilden, wird über die Bestimmung der Dichte einer Folie vor und nach dem Verstrecken ermittelt. Da die Masse der Folie sich durch das Verstrecken nicht ändert, kann über die Änderung der Dichte das Volumen der Hohlräume gemäß folgender Formel berechnet werden:

$$\text{Hohlraumvolumen [\%]} = (1 - (\text{Dichte nach Verstrecken} / \text{Dichte vor Verstrecken})) * 100$$

Für die Bestimmung der Dichte, die gemäß DIN EN ISO 1183-1 (Teil 1: "Dichtemessung nach dem Eintauchverfahren", April 2013) erfolgt, werden standardmäßig drei Probenkörper genommen, die eine beliebige Form aufweisen können und eine Masse im Bereich von 1 bis 2 g aufweisen. Die Probenkörper werden bei der Temperatur im Bereich von 20-23 °C in destilliertem Wasser eingetaucht, welches 0,1 % eines oberflächenaktiven Mittels (beispielsweise Spülmittel) zur Entfernung der Luftbläschen auf der Oberfläche der Probenkörper (beispielsweise beliebig gefaltete Folie) enthält. Die Probenkörper werden auf Luftblasenfreiheit kontrolliert. Für die Massen- und Temperaturbestimmung werden Messgeräte mit einer Wiegegenauigkeit von weniger als 0,001 Gramm bzw. $\pm$ 0,5 °C verwendet, die Reproduzierbarkeit liegt bei etwa $\pm$ 0,005 $g/cm^3$.

Sofern die Dichte des Probenkörpers >1,0 $g/cm^3$ ist und dieser daher nach Eintauchen in dem destillierten Wasser nach unten sinkt, wird die Dichte folgendermaßen bestimmt:
Die Dichte DI wird als Mittelwert von 3 Messungen nach folgender Gleichung bestimmt:

$$DI = (m1 * DIFI) / (m1 - m2) \, [g/cm^3]$$

Dabei stehen:

m1: für die ermittelte Masse der Probe in g in Luft,
m2: für ermittelte Masse der Probe in g, eingetaucht in der Prüfflüssigkeit (gemäß Messmethode bereits reduziert um den Auftrieb des Probenhalters), und
DIFI: für die Dichte der Prüfflüssigkeit (Wasser, 20 °C, DIFI = 0,998 $g/cm^3$)

Sofern die Dichte des Probenkörpers $\leq$ 1,0 $g/cm^3$ ist und dieser daher nach dem Eintauchen in dem destillierten Wasser aufschwimmt, wird die Dichte folgendermaßen bestimmt:
Die Dichte DI wird dann - korrigiert um den Senkkörper - als Mittelwert von 3 Messungen nach folgender Gleichung bestimmt:

$$DI = (m1 * DIFI) / (m1 + m3 - m4) \, [g/cm^3]$$

Dabei stehen:

m1: für die ermittelte Masse der Probe in g in Luft,
m3: für die ermittelte Masse des Senkkörpers in g in der Prüfflüssigkeit,
m4: für die ermittelte Masse der Probe (incl. des Senkkörpers) in g eingetaucht in der Prüfflüssigkeit (siehe Hinweis bei m2, oben), und
DIFI: für die Dichte der Prüfflüssigkeit (Wasser, 20 °C, DIFI = 0,998 $g/cm^3$).
Die Einzelwerte aus den drei Messungen werden gemittelt und statistisch ausgewertet.

Bestimmung der Kristallisation-Halbwertszeit

Die Kristallisations-Halbwertszeit des in der ersten Polymer-Lage A eingesetzten Copolyesters wird mithilfe eines dynamischen Differenzkalorimeters (Differential Scanning Calorimeter bzw. DSC) bestimmt. Die dynamische Differenzkalorimetrie (DSC) ist eine Standardmethode für die Messung der thermischen Eigenschaften, insbesondere der Phasenübergangstemperaturen von Festkörpern. In der vorliegenden Erfindung wird die Kristallisationshalbwertszeit ermittelt, indem 15 mg des zu messenden Polyesters auf 290°C erwärmt, hieran anschließend in Gegenwart von Helium mit einer Rate von 320°C pro Minute auf eine vorgegebene Temperatur von 180 bis 210°C gekühlt und die Zeitspanne bis zum Erreichen der isothermen Kristallisationstemperatur bzw. des Kristallisationspeaks der DSC-Kurve detektiert. Anhand des zeitabhängigen Verlaufs der Kristallisation wird die Kristallisationshalbwertszeit bestimmt. Die Kristallisations-halbwertszeit entspricht der Zeit, die bei der vorgegebenen Temperatur von 180 bis 210°C nach der Initialphase der Kristallisation benötigt wird, um in der Probe 50% der maximal erreichbaren Kristallinität zu erhalten.

Beispiel 1 - Vergleich verschiedener Vergleichsfolien und vier erfindungsgemäßer Folien

In den nachfolgenden Beispielen wurden folgende Abkürzungen verwendet:

| | |
|---|---|
| VG: | Vergleichsbeispiel |
| LV: | Embrace LV (Hersteller: Eastman Chemical Company) |
| HY: | Embrace HY 1000 (Hersteller: Eastman Chemical Company) |
| AB: | Antiblock-Masterbatch (Hersteller Clariant) |
| $TiO_2$-MB: | Titandioxid-haltiger Masterbatch (bezogen von der Sukano AG, Schindellegi, Schweiz; oder von Clariant Produkte (Deutschland) GmbH, Frankfurt/Main, Deutschland) |
| IR-MB: | Industrieruß-haltiger Masterbatch |

Titandioxid wurde in Form eines PETG- Masterbatches mit 70 Gew.-% $TiO_2$ den in den nachfolgenden Tabellen für die Vergleichsbeispiele bzw. die erfindungsgemäßen Beispiele angegebenen Zusammensetzungen in Gew.-% zugegeben, Industrieruß in Form eines PETG-Masterbatches mit 25 Gew.-% Industrieruß.
Zunächst wurden als Vergleichsbeispiel 1 (VG1) und Vergleichsbeispiel 2 (VG2) zwei als Muster erhältliche 1-lagige Folien getestet, die eine identische Zusammensetzung aufwiesen und sich lediglich durch die Dicke unterschieden. Die Mischung aus 75 % LV und 25 % HY führte nach dem Verstrecken zu Hohlräumen, die eine Opazität der wärmeschrumpfbaren Folie bewirkten. Die Details der Folienzusammensetzungen und die Ergebnisse sind in der nachfolgenden Tabelle 1 gezeigt.

Tabelle 1:

| | VG1 | VG2 |
|---|---|---|
| Lage 1 | 75% LV 25% HY | 75% LV 25% HY |
| Lage 2 | - | - |
| Lage 3 | - | - |
| Dicke | 110 $\mu$m | 50 $\mu$m |
| Transmission | 13,3% | 28,3% |

Für das Vergleichsbeispiel 2 wurde zusätzlich der L*-Wert bestimmt, der bei 96 lag. Die gemessenen Transmissionen betrugen selbst bei Foliendicken von 110 $\mu$m mehr als 13 % und erfüllten somit nicht die Anforderungen an die Lichtdichtheit, die insbesondere beim Verpacken von lichtempfindlichen Lebensmitteln zu erfüllen sind. Daraus wurde gefolgert, dass die erforderlichen Transmissionswerte in einlagigen hohlraumhaltigen Folien nicht zu erreichen waren, ohne in der Praxis untaugliche Foliendicken in Kauf nehmen zu müssen.
Anschließend wurden mehrere Versuche mit 3-lagigen Folien durchgeführt, bei denen verschiedene Kombinationen des Einsatzes von HY in unterschiedlichen Konzentrationen und/oder in unterschiedlichen Lagen sowie des Einsatzes von Titandioxid als weißfärbendes und damit lichtblockierendes Pigment getestet wurden.
Die für die jeweiligen Lagen vorgesehenen Gemische wurden einem Extruder zugeführt, in welchem sie geschmolzen, homogenisiert und mit einem entsprechenden Druck bei einer Extrusionstemperatur im Bereich von 240 °C bis zu 180 °C zu einem Feedblock befördert wurden. In dem Feedblock werden die jeweiligen Schmelzeströme definiert zusammengeführt und über eine Breitschlitzdüse zu einem flächigen Schmelzefilm ausgeformt. Dieser Schmelzefilm wurde an eine Kühlwalze übergeben, mit der von der Drehgeschwindigkeit der Kühlwalze vorgegebenen Geschwindigkeit aus diesem Spalt abgezogen, wodurch eine Vorfolie erhalten wurde, die unter die Glastemperatur abgekühlt wurde.
Die abgekühlte Vorfolie wurde noch innerhalb der gleichen Produktionsanlage wieder auf eine definierte Strecktemperatur im Bereich von 75 °C bis 100 °C erwärmt, einer Streckeinheit zugeführt, und unter den jeweils vorgegebenen Streckparametern mit einem Streckfaktor im Bereich von 4 bis 6 verstreckt. Die Verstreckung erfolgte in Transversalrichtung (Querrichtung). Nach dem Verstrecken und Abkühlen wurde die nun wärmeschrumpfbare Folie für die weiteren Untersuchungen verwendet.

Die Zusammensetzungen der Folie bzw. deren Lagen gemäß den Vergleichsversuchen 3 bis 7 und Ergebnisse der Untersuchungen sind in der nachfolgenden Tab. 2 gezeigt.

Tabelle 2:

|  | VG3 | VG4 | VG5 | VG6 | VG7 |
|---|---|---|---|---|---|
| Lage 1 | 99,5 % LV<br>0,5% AB | 80% LV<br>20% HY | 89,5 % LV<br>10% HY<br>0,5% AB | 99,5 % LV<br>0,5% AB | 99,5 % LV<br>0,5% AB |
| Lage 2 | 70% LV<br>30% HY | 80% LV<br>20% $TiO_2$-MB | 75% LV<br>25% HY | 70% LV<br>15% HY<br>15% $TiO_2$-MB | 70% LV<br>30% $TiO_2$-MB |
| Lage 3 | 99,5 % LV<br>0,5% AB | 80% LV<br>20% HY | 89,5 % LV<br>10% HY<br>0,5% AB | 99,5 % LV<br>0,5% AB | 99,5 % LV<br>0,5% AB |
| Dicke | 12,5 $\mu$m<br>25 $\mu$m<br>12,5 $\mu$m | 4 $\mu$m<br>32 $\mu$m<br>4 $\mu$m | 4 $\mu$m<br>32 $\mu$m<br>4 $\mu$m | 4 $\mu$m<br>32 $\mu$m<br>4 $\mu$m | 4 $\mu$m<br>32 $\mu$m<br>4 $\mu$m |
| Transmission | 30,3% | 35,1% | 32,4% | 31,6% | 37,1% |

Die Angaben der Tabelle 2 im Bezug auf Titandioxid beziehen sich auf den Gewichtsanteil des entsprechenden Masterbaches, der 70 Gew.-% Titandioxid enthielt ($TiO_2$-MB).

Mit keiner der Zusammensetzungen wurde eine Transmission von maximal 15 % erreicht. Anschließend wurden erfindungsgemäße Folien mit zwei Lagen getestet, von denen eine Lage Industrieruß durch Zumischung des vorstehend angegebenen, Industrieruß-haltigen Masterbatches enthielt und somit der wenigstens ein Dunkelpigment umfassenden ersten Polymer-Lage A in Form einer ersten Polyester-Lage A entsprach. Zur Abdeckung der von der Industrieruß-haltigen Lage verursachten schwarzen Farbe enthielt die andere Lage Titandioxid durch Zumischung des vorstehend angegebenen, Titandioxid-haltigen Masterbatches und entsprach somit der wenigstens ein Weißpigment umfassenden zweiten Polymer-Lage B in Form einer zweiten Polyester-Lage B. Bei Aufsicht auf die zweite Polyester-Lage B war eine perfekt bedruckbare, weiße Oberfläche zu sehen, welche die darunterliegende erste Polyester-Lage A farblich vollständig abdeckte. Die genaue Zusammensetzung sowie die erhaltenen Ergebnisse sind in der Tab. 3 gezeigt.

Tabelle 3:

|  | Erfindungsgemäßes Beispiel 1 | Erfindungsgemäßes Beispiel 2 | Erfindungsgemäßes Beispiel 3 | Erfindungsgemäßes Beispiel 4 |
|---|---|---|---|---|
| Lage 1 (entspr. Lage B) | 70 % LV<br>20 % HY<br>10 % $TiO_2$-MB | 73 % LV<br>17 % HY<br>10 % $TiO_2$-MB | 70 % LV<br>30 % $TiO_2$-MB | 70 % LV<br>20 % HY<br>10 % $TiO_2$-MB |
| Lage 2 (entspr. Lage A) | 67 % LV<br>12 % HY<br>9 % $TiO_2$-MB<br>12 % IR-MB | 62 % LV<br>17 % HY<br>9 % $TiO_2$-MB<br>12 % IR-MB | 77 % LV<br>10 % $TiO_2$-MB<br>12 % IR-MB<br>1 % AB | 71 % LV<br>17 % HY<br>9 % $TiO_2$-MB<br>3 % IR-MB |
| Lage 3 | - | - |  |  |
| Dicke<br>Lage B<br>Lage A | 32 $\mu$m<br>8 $\mu$m | 32 $\mu$m<br>8 $\mu$m | 32 $\mu$m<br>8 $\mu$m | 32 $\mu$m<br>8 $\mu$m |
| Transmission | 0,7% | 0,9 % | 1,3% | 6,3% |

Die erfindungsgemäßen Folien wiesen eine Lichttransmission von weniger als 10 % und teilweise sogar weniger als 5 % auf, wobei bei einer geringen Foliendicke von insgesamt 40 μm sogar Werte unter 1 % erreicht wurden. Die Messungen erfolgten mittels des Messgeräts "BYK-Gardner haze-gard plus", wobei beispielhaft die Folie gemäß dem erfindungsgemäßen Beispiel 2 mit dem Spektralfotometer "color i7" vermessen wurde und für den Bereich von 360 nm bis 400 nm Transmissionen von deutlich unter 0,1 % ermittelt wurden. Die Folien waren damit auch für kritische Anwendungen im Lebensmittelbereich, bei denen lichtverderbliche Lebensmittel geschützt werden sollen, verwendbar. Für das erfindungsgemäße Beispiel 2 wurde noch der L*-Wert bestimmt, der bei 90 lag. Angesichts dieses Weißgrads war die B-Lage der Folie ausreichend weiß, um eine vom Untergrund unbeeinflusste Aufbringung einer Druckfarbe zu ermöglichen.

Beispiel 2 - weitere Parameter der erfindungsgemäßen Folie

Von der erhaltenen erfindungsgemäßen Folie wurden der Glanz bei 60° gemäß der Prüfvorschrift ASTM D-523, die Rauheit sowie die Peak-Anzahl (Anzahl der Profilspitzen auf 10 mm Bezugslänge) bestimmt. Die Ergebnisse sind im Vergleich mit Papier, wobei Standard-Kopierpapier verwendet wurde, in der nachfolgenden Tabelle 4 gezeigt.

Tabelle 4:

|  | Papier | Folie gemäß erfindungsgemäßem Beispiel 2 aus Tab. 3 |
|---|---|---|
| Glanz 60° | 3,8 | 5,0 |
| RZ | 19,3 | 2,3 |
| Peaks pro cm | 144 | 300 |

Die erfindungsgemäße Folie wies keine glatte Oberfläche auf, die insbesondere bei Ergreifen eines mit einer derartigen Folie umhüllten Gegenstands mit feuchten oder nassen Händen zu einem Verrutschen führen können. Vielmehr wurde die Haptik als papierähnlich empfunden, was auf die auf der Oberfläche der erfindungsgemäßen Folie vorliegenden Peaks zurückzuführen war, die ihrerseits durch den Anteil an hohlraumbildenden Additiv "HY" bedingt waren. Die Lage 1 der Folie Nr. 2 gemäß Tab. 3 entspricht der zweiten Polymer-Lage B der wärmeschrumpfbaren Folie. Die Lage 2 der erfindungsgemäßen Folie Nr. 2 gemäß Tab. 3 entspricht aufgrund ihres Gehalts an Dunkelpigment in Form von Industrieruß der ersten Polymer-Lage A. Da die erste Polymer-Lage A und die zweite Polymer-Lage B einen gleichen Anteil an hohlraumbildendem Additiv "HY" enthielten, war die Porosität beider Lagen identisch. Die Schrumpfung der Folie nach 15 Sekunden in einem Wasserbad einer Temperatur von 95 °C betrug 67 %.

Die Tab. 5 zeigt weitere Eigenschafts-Parameter der erfindungsgemäßen Folie Nr. 2 aus Tab. 3:

Tabelle 5:

| Parameter | Meßnorm | Einheit | typischer Wert |
|---|---|---|---|
| Dicke | ISO 4593 | μm | 40 |
| Dickentoleranz |  | % | ± 10 |
| Dichte | DIN EN ISO 1183-2 | g/cm$^2$ | 1,22 |
| Dichtetoleranz |  | % | ±2 |
| Materialertrag bei 40 μm | DIN EN ISO 2286-2 | m$^2$/kg | 20,5 |
| Schrumpfung in Transversalrichtung | DIN 53377 | % | 67 |
| Schrumpfungstoleranz in Transversalrichtung | 15 sec in 95 °C heißem Wasser | pp | ± 2 |
| Schrumpfung in Maschinenrichtung |  | % | -1 |
| Schrumpfungstoleranz in Maschinenrichtung |  | pp | ± 2 |
| Zugfestigkeit in Transversairichtung | DIN EN ISO 527 V = 50 mm/min | MPa | 100 |
| Zugfestigkeit in Maschinenrichtung |  | MPa | 40 |
| E-Modul in Transversalrichtung |  | MPa | 3400 |
| E-Modul in Maschinenrichtung |  | MPa | 1500 |

Wenngleich die Erfindung im Detail durch bevorzugte Ausführungsbeispiele näher illustriert und erläutert wurde, so ist die Erfindung nicht durch die offenbarten Beispiele eingeschränkt und andere Variationen können vom Fachmann hieraus abgeleitet werden, ohne den Schutzumfang der Erfindung zu verlassen. Es ist daher klar, dass eine Vielzahl von Variationsmöglichkeiten existiert. Es ist ebenfalls klar, dass beispielhaft genannte Ausführungsformen wirklich nur Beispiele darstellen, die nicht in irgendeiner Weise als Begrenzung etwa des Schutzbereichs oder der Anwendungsmöglichkeiten der Erfindung aufzufassen sind. Vielmehr versetzen die vorhergehende Beschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche und deren rechtliche Entsprechungen, wie etwa weitergehenden Erläuterung in der Beschreibung, definiert wird. Ebenfalls ist es möglich, verschiedene Ausführungsformen wie hierin beschrieben, oder einzelne Merkmale von Ausführungsformen miteinander zu kombinieren.

Gewerbliche Anwendbarkeit

Die wärmeschrumpfbare Folie bzw. ein Schlauch, umfassend eine derartige wärmeschrumpfbare Folie, sind beispielsweise geeignet, um Gegenstände lichtdicht zu umhüllen. Weiterhin ist ein mit einer derartigen Folie bzw. einen derartigen Schlauch umhüllter Gegenstand geeignet zur Aufnahme lichtempfindlicher Lebensmittel.

**Patentansprüche**

1.  Wärmeschrumpfbare, monoaxial verstreckte Folie, bestehend aus

    - einer erste Polymer-Lage A, die wenigstens ein Dunkelpigment umfasst,
    - einer zweite Polymer-Lage B, die wenigstens ein Weißpigment umfasst, sowie
    - optional wenigstens einer auf der zweiten Polymer-Lage B aufgebrachten Pigmentlage, welche eine Bedruckung darstellt,
    wobei die erste Polymer-Lage A und die zweite Polymer-Lage B unabhängig voneinander ein oder mehrere Polymere umfassen, die ausgewählt sind aus der Gruppe der Polyester, Polyolefine, Polystyrole und Polyvinylhalogenide,
    wobei
    - die Folie eine Dicke von 20 $\mu$m bis 100 $\mu$m aufweist,
    - das Dickenverhältnis der ersten Polymer-Lage A zur zweiten Polymer-Lage B im Bereich 5:95 bis 50:50 liegt,
    - die Lichttransmission der Folie gemäß ASTM D1003 gemessen maximal 12 % beträgt, und
    - die Folie nach 15 Sekunden in einem Wasserbad mit einer Temperatur von 95 °C eine Schrumpfung in einer Hauptschrumpfrichtung im Bereich von 20 % bis 85 % aufweist.

2.  Wärmeschrumpfbare Folie nach Anspruch 1, **dadurch gekennzeichnet, dass** die Folie aus einer ersten Polymer-Lage A, die wenigstens ein Dunkelpigment umfasst, und einer zweiten Polymer-Lage B, die wenigstens ein Weißpigment umfasst, besteht.

3.  Wärmeschrumpfbare Folie nach Anspruch 1 oder 2, **dadurch gekennzeichnet, dass** die zweite Polymer-Lage B einen L*-Wert gemäß DIN 5033 gemessen von wenigstens 85 aufweist.

4.  Wärmeschrumpfbare Folie nach einem der vorhergehenden Ansprüche, **dadurch gekennzeichnet, dass** wenigstens eine der voneinander abgewandten Oberflächen der ersten Polymer-Lage A und der zweiten Polymer-Lage B glatt ist.

5.  Wärmeschrumpfbare Folie nach einem der vorhergehenden Ansprüche, **dadurch gekennzeichnet, dass** die zweite Polymer -Lage B eine Rauheit Rz gemäß DIN EN ISO 4287 gemessen von mehr als 2,00 $\mu$m, vorzugsweise eine Rauheit Rz im Bereich von 4 $\mu$m bis 6 $\mu$m, aufweist.

6.  Wärmeschrumpfbare Folie nach einem der Ansprüche 1 bis 4, **dadurch gekennzeichnet, dass** die zweite Polymer-Lage B Hohlräume umfasst.

7.  Wärmeschrumpfbare Folie nach Anspruch 6, **dadurch gekennzeichnet, dass** die erste Polymer-Lage A ebenfalls Hohlräume umfasst, wobei die Porosität der zweiten Polymer-Lage B und der ersten Polymer-Lage A identisch ist.

**8.** Wärmeschrumpfbare Folie nach einem der vorhergehenden Ansprüche, **dadurch gekennzeichnet, dass** die zweite Polymer-Lage B bedruckbar ist.

**9.** Wärmeschrumpfbare Folie nach einem der vorhergehenden Ansprüche, **dadurch gekennzeichnet, dass** die erste Polymer-Lage A und die zweite Polymer-Lage B unabhängig voneinander einen Polyester umfassen.

**10.** Wärmeschrumpfbare Folie nach einem der Ansprüche 1 bis 8, **dadurch gekennzeichnet, dass** die erste Polymer-Lage A und die zweite Polymer-Lage B unabhängig voneinander ein Polyolefin umfassen.

**11.** Wärmeschrumpfbare Folie nach einem der Ansprüche 1 bis 8, **dadurch gekennzeichnet, dass** die erste Polymer-Lage A und die zweite Polymer-Lage B unabhängig voneinander ein Polystyrol umfassen.

**12.** Wärmeschrumpfbare Folie nach einem der Ansprüche 1 bis 8, **dadurch gekennzeichnet, dass** die erste Polymer-Lage A und die zweite Polymer-Lage B unabhängig voneinander ein Polyvinylhalogenid umfassen.

**13.** Schlauch, umfassend eine wärmeschrumpfbare Folie nach einem der Ansprüche 1 bis 12.

**14.** Gegenstand, ausgestattet mit einer wärmeschrumpfbaren Folie nach einem der Ansprüche 1 bis 12, oder einer entsprechenden Folie nach Wärmeschrumpfung, oder einem Schlauch nach Anspruch 13, oder einem entsprechenden Schlauch nach Wärmeschrumpfung.

**15.** Gegenstand nach Anspruch 14, wobei die erste Polymer-Lage A zum Gegenstand weist und die zweite Polymer-Lage B vom Gegenstand weg weist.

**16.** Verfahren zur Herstellung einer wärmeschrumpfbaren Folie nach einem der Ansprüche 1 bis 12, umfassend:

- Bereitstellen eines ersten Polymers A, das wenigstens ein Dunkelpigment umfasst,
- Bereitstellen eines zweiten Polymers B, das wenigstens ein Weißpigment umfasst,
- Coextrudieren einer Vorfolie, umfassend eine erste Polymer-Lage A und eine zweite Polymer-Lage B,
- Einstellen der Vorfolie auf eine Strecktemperatur,
- Verstrecken der Vorfolie unter Erhalt einer wärmeschrumpfbaren Folie.

**Claims**

**1.** A heat-shrinkable monoaxially oriented film consisting of

- a first polymer ply A comprising at least one dark pigment,
- a second polymer ply B comprising at least one white pigment, and
- optionally at least one pigment ply, which is applied to the second polymer ply B and which constitutes a printing, wherein the first polymer ply A and the second polymer ply B independently of one another comprise one or more polymers selected from the group of polyesters, polyolefins, polystyrenes and polyvinyl halides, wherein
- the film has a thickness of from 20 $\mu$m to 100 $\mu$m,
- the thickness ratio of the first polymer ply A to the second polymer ply B lies in the range of 5:95 to 50:50,
- the light transmission of the film, measured according to ASTM D1003, is not more than 12 %, and
- the film after 15 seconds in a water bath having a temperature of 95°C exhibits a shrinkage in a main shrinking direction in the range of from 20 % to 85 %.

**2.** The heat-shrinkable film according to claim 1, **characterised in that** the film consists of a first polymer ply A comprising at least one dark pigment, and of a second polymer ply B comprising at least one white pigment.

**3.** The heat-shrinkable film according to claim 1 or 2, **characterised in that** the second polymer ply B has an L* value, measured according to DIN 5033, of at least 85.

**4.** The heat-shrinkable film according to any one of the preceding claims, **characterised in that** at least one of the surfaces of the first polymer ply A and the second polymer ply B facing away from one another is smooth.

5. The heat-shrinkable film according to any one of the preceding claims, **characterised in that** the second polymer ply B has a roughness Rz, measured according to DIN EN ISO 4287, of more than 2.00 $\mu$m, preferably a roughness Rz in the range of from 4 $\mu$m to 6 $\mu$m.

6. The heat-shrinkable film according to any one of claims 1 to 4, **characterised in that** the second polymer ply B comprises cavities.

7. The heat-shrinkable film according to claim 6, **characterised in that** the first polymer ply A likewise comprises cavities, wherein the porosity of the second polymer ply B and of the first polymer ply A is identical.

8. The heat-shrinkable film according to any one of the preceding claims, **characterised in that** the second polymer ply B is printable.

9. The heat-shrinkable film according to any one of the preceding claims, **characterised in that** the first polymer ply A and the second polymer ply B independently of one another comprise a polyester.

10. The heat-shrinkable film according to any one of claims 1 to 8, **characterised in that** the first polymer ply A and the second polymer ply B independently of one another comprise a polyolefin.

11. The heat-shrinkable film according to any one of claims 1 to 8, **characterised in that** the first polymer ply A and the second polymer ply B independently of one another comprise a polystyrene.

12. The heat-shrinkable film according to any one of claims 1 to 8, **characterised in that** the first polymer ply A and the second polymer ply B independently of one another comprise a polyvinyl halide.

13. A hose comprising a heat shrinkable film according to any one of claims 1 to 12.

14. An object provided with a heat-shrinkable film according to any one of claims 1 to 12, or a corresponding film after heat shrinking, or a hose according to claim 13, or a corresponding hose after heat shrinking.

15. The object according to claim 14, wherein the first polymer ply A points toward the object and the second polymer ply B points away from the object.

16. A method for producing a heat-shrinkable film according to any one of claims 1 to 12, comprising:

- providing a first polymer A comprising at least one dark pigment;
- providing a second polymer B comprising at least one white pigment;
- coextruding a preliminary film comprising a first polymer ply A and a second polymer ply B;
- setting the preliminary film to an orientation temperature;
- orienting the preliminary film so as to obtain a heat-shrinkable film.


**Revendications**

1. Film thermorétractable, allongé en direction monoaxiale, constitué

- d'une première couche de polymère A, qui comprend au moins un pigment sombre,
- d'une deuxième couche de polymère B, qui comprend au moins un pigment blanc, ainsi
- qu'en option, d'au moins une couche de pigment appliquée sur la deuxième couche de polymère B, laquelle représente une impression,
la première couche de polymère A et la deuxième couche de polymère B comprenant indépendamment l'une de l'autre un ou plusieurs polymères qui sont choisis dans le groupe des polyesters, des polyoléfines, des polystyrènes et des polyhalogénures de vinyle,
- le film présentant une épaisseur de 20 $\mu$m à 100 $\mu$m,
- le rapport de l'épaisseur de la première couche de polymère A à la deuxième couche de polymère B se situant dans l'ordre de 5 : 95 à 50 : 50,
- la transmission lumineuse du film, mesurée selon ASTM D1003 s'élevant à un maximum de 12 %, et
- après un séjour de 15 secondes dans un bain d'eau à une température de 95 °C, le film faisant preuve d'une contraction de l'ordre de 20 % à 85 % dans une direction de contraction principale.

**2.** Film thermorétractable selon la revendication 1, **caractérisé en ce que** le film est constitué d'une première couche de polymère A, qui comprend au moins un pigment sombre et d'une deuxième couche de polymère B, qui comprend au moins un pigment blanc.

**3.** Film thermorétractable selon la revendication 1 ou 2, **caractérisé en ce que** la deuxième couche de polymère B présente une valeur L* mesurée selon DIN 5033 d'au moins 85.

**4.** Film thermorétractable selon l'une quelconque des revendications précédentes, **caractérisé en ce qu'**au moins l'une des surfaces mutuellement opposées de la première couche de polymère A et de la deuxième couche de polymère B est lisse.

**5.** Film thermorétractable selon l'une quelconque des revendications précédentes, **caractérisé en ce que** la deuxième couche de polymère B fait preuve d'une rugosité Rz, mesurée selon DIN EN ISO 4287 supérieure à 2,00 $\mu$m, de préférence d'une rugosité Rz de l'ordre de 4 $\mu$m à 6 $\mu$m.

**6.** Film thermorétractable selon l'une quelconque des revendications 1 à 4, **caractérisé en ce que** la deuxième couche de polymère B comprend des cavités.

**7.** Film thermorétractable selon la revendication 6, **caractérisé en ce que** la première couche de polymère A comprend également des cavités, la porosité de la deuxième couche de polymère B et de la première couche de polymère A étant identique.

**8.** Film thermorétractable selon l'une quelconque des revendications précédentes, **caractérisé en ce que** la deuxième couche de polymère B est imprimable.

**9.** Film thermorétractable selon l'une quelconque des revendications précédentes, **caractérisé en ce qu'**indépendamment l'une de l'autre, la première couche de polymère A et la deuxième couche de polymère B comprennent un polyester.

**10.** Film thermorétractable selon l'une quelconque des revendications 1 à 8, **caractérisé en ce qu'**indépendamment l'une de l'autre, la première couche de polymère A et la deuxième couche de polymère B comprennent une polyoléfine.

**11.** Film thermorétractable selon l'une quelconque des revendications 1 à 8, **caractérisé en ce qu'**indépendamment l'une de l'autre, la première couche de polymère A et la deuxième couche de polymère B comprennent un polystyrène.

**12.** Film thermorétractable selon l'une quelconque des revendications 1 à 8, **caractérisé en ce que** la première couche de polymère A et la deuxième couche de polymère B comprennent indépendamment l'une de l'autre un polyhalogénure de vinyle.

**13.** Flexible, comprenant un film thermorétractable selon l'une quelconque des revendications 1 à 12.

**14.** Objet, équipé d'un film thermorétractable selon l'une quelconque des revendications 1 à 12 ou d'un film correspondant après thermorétraction, ou d'un flexible selon la revendication 13 ou d'un flexible correspondant après thermorétraction.

**15.** Objet selon la revendication 14, la première couche de polymère A étant dirigée vers l'objet et la deuxième couche de polymère B étant dirigée en éloignement de l'objet.

**16.** Procédé, destiné à la fabrication d'un film thermorétractable selon l'une quelconque des revendications 1 à 12, comprenant :

- la mise à disposition d'un premier polymère A, qui comprend au moins un pigment sombre,
- la mise à disposition d'un deuxième polymère B, qui comprend au moins un pigment blanc,
- la coextrusion d'un film préformé, comprenant une première couche de polymère A et une deuxième couche de polymère B,

- le réglage du film préformé à une température d'étirage,
- l'étirage du film préformé en maintenant un film thermorétractable.

**EP 3 383 652 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006051657 A1
- DE 102005025233 A1
- EP 2298665 A1
- US 7431909 B1
- US 7655209 B2
- DE 102007061307 A1
- DE 4334735 A1
- EP 01066339 B1
- EP 1692226 B1
- EP 169227 B1
- EP 1833886 B1